# EUROPEAN PATENT SPECIFICATION

(11) **EP 0 699 831 B1**
(45) Date of publication and mention of the grant of the patent: **10.01.2001**
(21) Application number: 95113724.9
(22) Date of filing: 31.08.1995
(51) Int. Cl.: F02D 13/02, F01L 13/00, F01L 1/26, F02B 31/00

(54) **Internal combustion engine and method for operating the same**
Brennkraftmaschine und Verfahren zu ihrem Betrieb
Moteur à combustion interne et son procédé de fonctionnement

(30) Priority: 31.08.1994 JP 20708994
(43) Date of publication of application: 06.03.1996
(73) Proprietor: YAMAHA HATSUDOKI KABUSHIKI KAISHA, Iwata-shi Shizuoka-ken, 438 (JP)
(72) Inventor: Tsuzuku, Hiroyuki, Iwata-shi, Shizuoka-ken 438 (JP); Saito, Tetsushi, Iwata-shi, Shizuoka-ken 438 (JP); Tsuchida, Naoki, Iwata-shi, Shizuoka-ken 438 (JP)
(74) Representative: Grünecker, Kinkeldey, Stockmair & Schwanhäusser Anwaltssozietät

(56) References cited:
- EP-A- 0 615 058
- EP-A- 0 668 436
- DE-A- 3 600 408
- DE-A- 4 108 469
- FR-A- 2 512 493
- JP-A- 6 193 455
- US-A- 4 667 636
- US-A- 4 703 729
- US-A- 5 247 913
- PATENT ABSTRACTS OF JAPAN vol. 015 no. 393 (M-1165) ,4 October 1991 & JP-A-03 160113 (MAZDA MOTOR CORP) 10 July 1991,
- PATENT ABSTRACTS OF JAPAN vol. 010 no. 304 (M-526) ,16 October 1986 & JP-A-61 118518 (MAZDA MOTOR CORP) 5 June 1986,
- PATENT ABSTRACTS OF JAPAN vol. 009 no. 311 (M-436) ,7 December 1985 & JP-A-60 145419 (HONDA GIKEN KOGYO KK) 31 July 1985,

## Description

This invention relates to an internal combustion engine comprising an intake passage arrangement with a plurality of air intake valves; an exhaust passage arrangement having at least one exhaust valve, and a valve operating mechanism including at least one camshaft for operating said air intake and exhaust valves, and at least two valve shutdown means, being operated hydraulically via oil passages, each for temporarily uncoupling one of said intake valves from said valve operating mechanism.

Proposals have been made to make air/fuel ratios (A/F) lean to 20 or higher, for example to allow combustion which improves fuel economy, improves the cleansing of exhaust gases, etc. in four-cycle engines. Air intake devices which have been proposed to stabilize the lean air/fuel ratio combustion in the prior art have principally offered means of strengthening the nows inside the cylinder by generating a vertical tumble of the air intake inside the cylinder in its axial direction, or a horizontal swirl of the air intake inside the cylinder around its perimeter during periods of low air intake when the engine is operating at low RPM or low load levels.

Air intake devices designed to generate the above mentioned swirl (as a first example of the prior art) which are equipped with center, left and right side air intake ports close one or the other of the above mentioned side air intake ports when the engine is in low RPM operating ranges where there is a low level of air intake, the air intake thereby being introduced into the cylinder through the remaining side air intake port and the central air intake port (see Japan Patent Application *Kokai* Publication Hei 3-160113 (1991)).

Air intake devices designed to generate the above mentioned tumble (as a second example of the prior art) are usually of the type that constrict the bottom wall area of the air intake ports to divert the air intake toward the ceiling side of the air intake ports. thereby introducing the air into the cylinder in a manner more directed toward the cylindrical axis.

The above described devices of the prior art, through establishing port shapes or air intake control valve configurations to strengthen the swirl, end up in reducing the maximum air intake flow when the engine is operating at high RPM, high load conditions: but if they use port shapes, and the like to assure adequate maximum air intake levels, then the swirling or tumbling turbulence inside the cylinder is inadequate.

An example for an internal combustion engine of the above kind is disclosed in the French Patent Application FR 2512493 and Japanese Patent Application JP 61118518. They describe an intake valve and an exhaust valve, which can be temporarily uncoupled from a valve operating mechanism while the intake air and the exhaust is guided through at least one remaining intake and exhaust valve opening. The valve shutdown means is operated hydraulically via one oil passage.

A further internal combustion engine presenting two parallel oil passages for the supply of the camshafts and valves is presented in JP 6-193 455. However, if there are more than two intake valves to be operated and, especially, if these two intake valves do not have parallel axes or if exhaust valves are to be shut off individually, it is extremely difficult to supply the single valve operating mechanisms and valve shutdown means with oil and therefore the engine becomes extremely expensive to manufacture.

Accordingly, it is an objective of the present invention to provide an improved internal combustion engine being able to manufacture at a lower cost while, at the same time, having a reliable valve shutdown means.

This objective is solved by the present invention for an internal combustion engine as indicated above in an inventive manner by two oil passages located on the air intake side and running in parallel to each other and to said camshaft, each individually communicating oil to one of said valve shutdown means of said intake valves.

Thus, especially having at least two oil passages, a first valve shutdown means of a first valve can be supplied with oil independent from a second valve shutdown means responsible for temporarily uncoupling this second valve. This construction of two parallel oil passages are especially suitable when, for example, more than two air intake valves are provided for each cylinder and the axes of the various air intake valves are not parallel to each other because it is no longer necessary to have additional oil channels to be drilled for connecting the one central oil passage with a single valve shutdown means.

Further preferred embodiments of the invention are laid down in further dependent claims.

The above described preferred embodiments of the internal combustion engine are provided with means for temporarily uncoupling at least one of the intake valves from the valve operating mechanism. Said means including the switchable valve lifter assemblies allowe to shut down at least one of the valves temporarily, so as to strengthen the flows in the cylinder without decreasing the maximum intake air volume.

Furthermore, the preferred embodiments of the engine create a fuel injection valve that directs the supply of fuel spray toward one or a plurality of air intake valve openings, a valve shutdown mechanism which can shut down a part of the air intake valves, and a valve shutdown control means that controls the valve shutdown based upon the engine operating status and the fuel injection condition; and as described in the specific configurations, during periods of operation in low RPM ranges when there are low requirements upon the amount of air intake, some of the air intake valves(s) are shut down in order to concentrate the introduction of air into the cylinder through just some of the air intake valve opening(s) to assure adequate flows within the cylinder. In this case, consideration has been given to the relationship between the fuel injection conditions and the valve(s) that are shut down, thereby making possible an appropriate fuel supply.

Accordingly, during periods of low air intake, the operation of the first and second side air intake valves is shut down to limit the inflow into the cylinder to just the center air intake valve. Accordingly, not only is the speed of the inflow increased by an amount related to the decrease in the inflow cross-sectional area, but the air intake is directed in the axial direction of the cylinder as it flows in, thereby assuring the generation of a tumbling action inside the cylinder along the axial direction of the cylinder to provide for stable combustion even with lean air/fuel ratios.

In this case, the fuel injection supply is directed primarily toward the center air intake valve opening, so that even when the overall air/fuel mixture ratio is lean, a comparatively high rich mixture is supplied to the vicinity of the spark plug, and this feature too works toward the stabilization of combustion.

In addition, during operations requiring mid-level air intake, just one or the other of the first and second side air intake valves is shut down so that the air intake flows through the center air intake valve and one of the side air intake valves. The tumble in the direction of the cylindrical axis generated by the inflow from the center air intake valve and the swirl along the circumference of the cylinder generated from the inflow from the side air intake valve are combined to generate a so-called diagonal swirl in the cylinder.

Further, during periods of high air intake, the center, first and second air intake valves are all operational to increase the cross sectional area of the air intake in a manner which does not increase intake drag in the air intake passage, thereby maximizing the amount of air intake. In this case, more fuel is mixed with the inflow from the center air intake valve opening, and there is less fuel in the air intake from the first and second air intake valve openings , thereby causing stratified combustion that also provides for stabilized combustion with lean air/fuel mixtures.

When, according to another embodiment, during periods of low air intake, the operations of both the foregoing center air intake valve and the second side air intake valve are shut down the inflow into the cylinder is confined to that from the first side air intake valve only. This design increases the inflow speed by an amount related to the diminished cross-sectional area of the inflow, thereby generating a strong swirl inside the cylinder around its circumference.

Also, during periods of mid-level air intake, only the center air intake valve is shut down, whereby the inflows from the first and second side air intake valves, each flowing around the circumference inside the cylinder, will collide and generate an axial flow (tumble). Here, almost no fuel from the fuel injection valve is directed toward the second side air intake valve, all of it being supplied to the side of the first side air intake valve, so that a stratified mixture is created inside the cylinder from a flow that contains a fuel mixture and one that does not, thereby generating the so-called stratified combustion.

Further, during periods of high air intake, just as in the configuration described above, the air intake is maximized. In this case, fuel is supplied to just the first side air intake valve and the center air intake valve, with none being sprayed toward the second side air intake valve, thereby creating a stratified combustion that is similar to that described for the mid-level air intake situation.

When during periods of low air intake, the foregoing center air intake valve and second side air intake valve are both shut down, the inflow into the cylinder is confined to that from the first side air intake valve. The reduction in the cross sectional area of the inflow correspondingly increases its speed to assure the generation of a swirling flow inside the cylinder.

During mid-level air intake periods, only the aforementioned second side air intake valve is shut down, whereby the air intake inflows come from both the first side air intake valve and the center air intake valve, with the swirl from the first side air intake valve and the tumble from the center air intake valve together generating a diagonal swirl.

The fuel is directed primarily toward the foregoing first side air intake valve opening and the center air intake valve opening, whereby, during periods of low and mid-level air intake, the flow generated inside the cylinder will stabilize combustion.

Further, during periods of high air intake, the action is similar to that described above wherein the amount of air intake is maximized. In this case, since the fuel is primarily directed toward the first side air intake valve opening and the center air intake valve opening, with no fuel being contained in the flow from the second side air intake valve opening, a stratified combustion is generated, and this feature too stabilizes combustion with lean air/fuel mixtures.

When both side air intake valves are shut down during periods of low air intake requirements, the inflow is confined to that from the center air intake valve, the increased speed of which generates a tumbling action.

During periods of mid-level air intake requirements, the center air intake valve is shut down so that the inflow is confined to that from the first and second air intake valves, and this feature too generates a tumble. Further, during periods of high air intake, an action similar to that described above is generated which maximizes the amount of air intake.

Preferably the fuel supply is directed at the first and second side air intake valve openings and toward the center air intake valve opening, so that there is an appropriate fuel mixture during the foregoing periods of low, mid-level and high air intake requirements, making stable combustion possible.

On the other hand, when during low and mid-level air intake periods, the center air intake valve is shut down, tumble is generated by the air intake inflows from the first and second side air intake valves. Since the fuel is directed toward the first and second side air intake valve openings, appropriate mixing during the aforementioned low, and mid-level air intake periods takes place.

Further, during periods of high air intake, this action maximizes the amount of air intake as described for the embodiments above. Since the fuel is directed toward the above mentioned first and second side air intake valve openings, with but little fuel contained in the air intake flow from the center air intake valve opening, a stratified combustion is generated that stabilizes combustion with lean air/fuel mixtures.

Hereinafter the present invention will be explained and illustrated in greater detail by means of preferred embodiments thereof in conjunction with accompanying drawings, wherein:
**Figure 1** is a front view of a four cycle internal combustion engine according to a preferred first embodiment of the invention,
**Figure 2** is a sectional front view of the right side air intake valves and the right exhaust valve areas of the engine of the foregoing first embodiment.
**Figure 3** is a sectional front view of the center air intake valve area of the engine of the foregoing first embodiment.
**Figure 4** is a sectional front view of the left side air intake valve and the left exhaust valve areas of the engine of the foregoing first embodiment.
**Figure 5** is a top view of the cylinder head's intake and exhaust cam carriers shown in the removed condition from the engine of the foregoing first embodiment.
**Figure 6** is a sectional top view of the air intake and exhaust cam carriers of the engine of the foregoing first embodiment.
**Figure 7** is a sectional back view of the oil system for the engine of the foregoing first embodiment.
**Figure 8** is a diagrammatic sectional top view of the air intake valve openings and exhaust valve opening areas of the engine of the foregoing first embodiment.
**Figure 9** is a diagrammatic figure to explain the operation of the engine of the foregoing first embodiment.
**Figure 10** is a sectional view showing the valve shutdown mechanism of the engine of the foregoing first embodiment.
**Figure 11** is a sectional view showing the valve shutdown mechanism of the engine of the foregoing first embodiment.
**Figure 12** is a sectional view showing the valve shutdown mechanism of the engine of the foregoing first embodiment.
**Figure 13** is a oil system diagram for the engine of the foregoing first embodiment.
**Figure 14** is a diagrammatic sectional top view of the air intake valve openings and exhaust valve openings of another embodiment (second embodiment) of a four-cycle engine.
**Figure 15** is a diagrammatic figure to explain the operation of the engine of the foregoing second embodiment.
**Figure 16** is a diagrammatic sectional top view of the air intake valve openings and exhaust valve openings of another embodiment (third embodiment) of a four-cycle engine.
**Figure 17** is a diagrammatic figure to describe the operation of the engine of the foregoing third embodiment.
**Figure 18** is a diagrammatic sectional top view of the air intake valve openings and exhaust valve openings of another embodiment (fourth embodiment) of a four-cycle engine.
**Figure 19** is a diagrammatic figure to explain the operation of the engine of the foregoing fourth embodiment.
**Figure 20** is a diagrammatic figure to explain a modification of the valve shutdown control operations of the engine of the foregoing first embodiment.
**Figure 21** is a diagrammatic figure to explain a modification of the valve shutdown control operations of the engine of the foregoing second embodiment.
**Figure 22** is a graph of engine RPM vs. torque characteristics to explain the effects of the engine of the foregoing first embodiment.
**Figure 23** is a diagrammatic figure to show the deployment of the various embodiments.
**Figure 24** is a graph of value lift vs. flow volume characteristics.

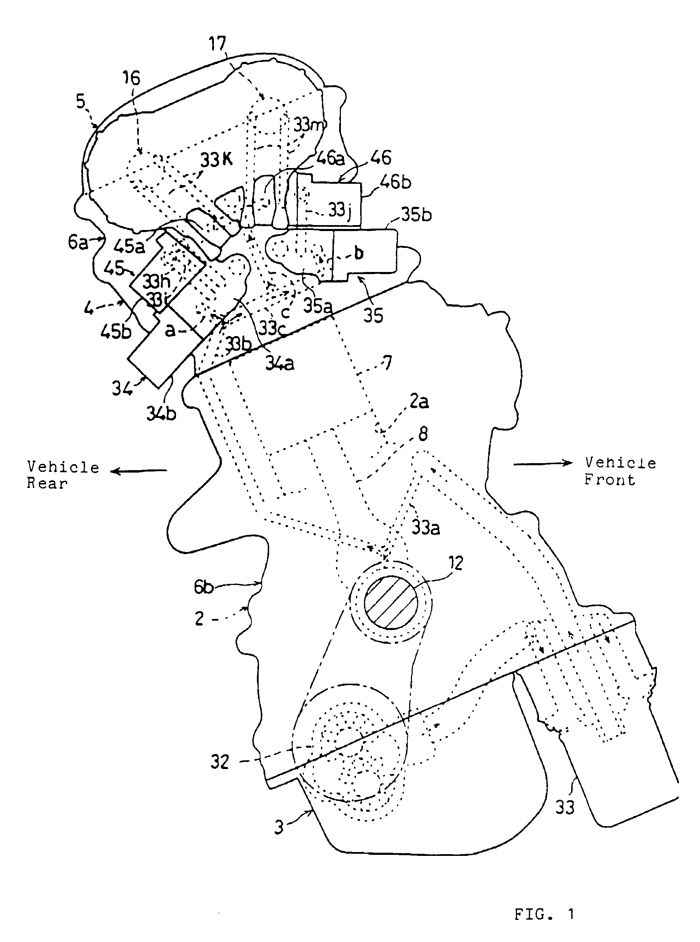

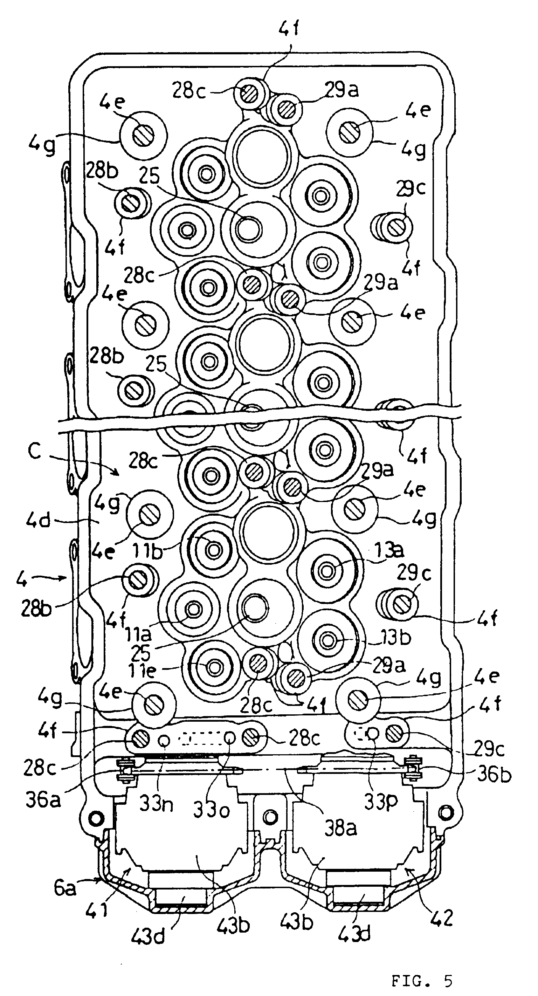

In the Figures, 1 represents a water cooled, four-cycle, four-cylinder, 5-valve engine equipped with the present embodiment. An oil pan 3 is attached to the mating surface on the bottom of the cylinder block 2 of said engine 1, while the cylinder head 4 is fastened to the upper mating surface by head bolts 4e, and a head cover 5 is further attached to the top mating surface of said cylinder head 4. A head side cover 6a is removably affixed to the front surface of the cylinder head 4 and the head cover 5 (the front surface in Figure 1), and a block side cover 6b is also removably attached to the front surface of the cylinder block 2. As shown in Figure 5, a total of 10 head bolts are placed between each of the cylinders and at both ends (front and rear) in the axial direction of the camshaft and thread into the boss areas 4g which are formed as protrusions from the bottom wall 4d of the cylinder head 4.

Pistons 7 have been slidably inserted into the four cylinder bores (cylinders) 2 that were formed in a row in the foregoing cylinder block 2. Said pistons 7 are linked to the crankshaft 12 by means of connecting rods 8. The crankshaft 12 is axially supported by crankshaft bearing areas 12a formed in the cylinder block 2 and by removable crankshaft bearing caps 12b.

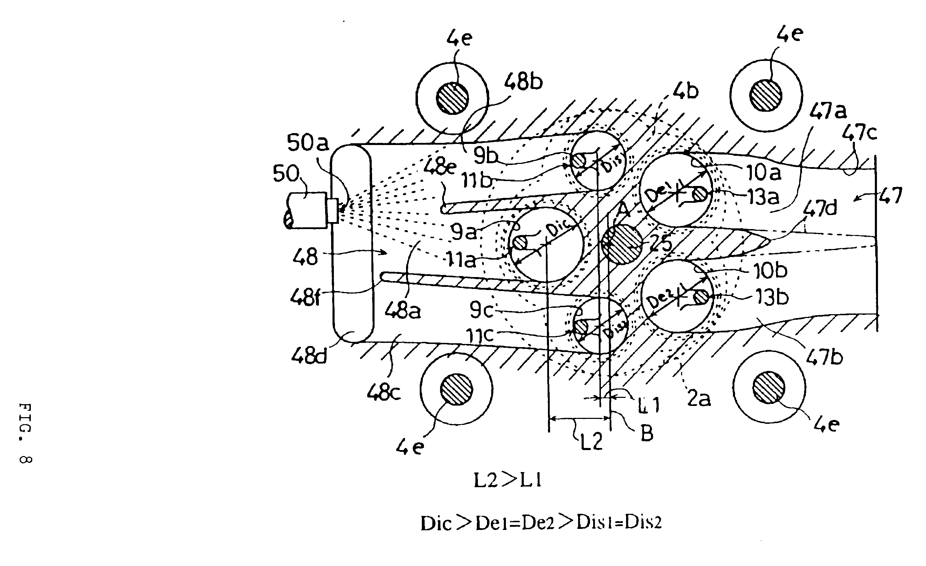

Concave combustion chambers 4b are formed on the side of the foregoing cylinder head 4 that mates with the cylinder block mating surface 4a. On one side (the left side in Figure 8) of the cylindrical axis A of these combustion chambers 4b are formed, with respect to the camshaft direction (the vertical direction in Figure 8), a center air intake valve opening 9a and a left and right (first and second) side air intake valve openings 9b, 9c on either side. Formed on the other side are two, namely a left and right (first and second), side exhaust valve openings 10a and 10b. Also, a spark plug 25 is threaded into the foregoing combustion chamber 4b at a position slightly displaced toward the exhaust side from the cylindrical axis A. As will be described below, the inflow from the foregoing center air intake valve opening 9a, when viewed from the axial direction A of the cylinder (see Figure 8) is directed toward the electrode of the foregoing spark plug 25.

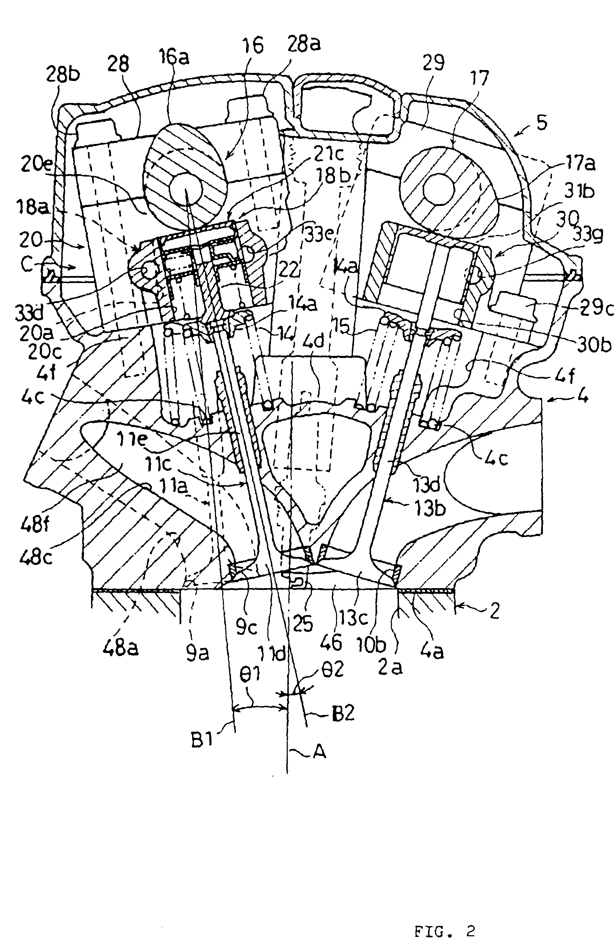

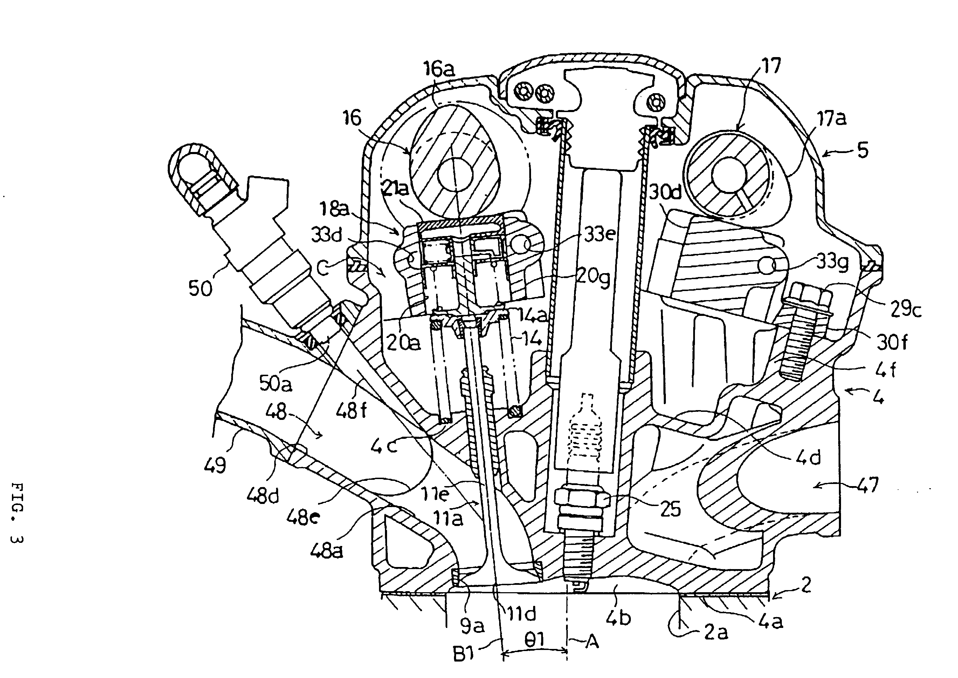

Here, the foregoing center and left and right side air intake valve openings 9a, 9b, 9c and the left and right exhaust valve openings 10a, 10b are positioned to border the inside circumference of the cylinder bore 2a. Accordingly, when viewed in the camshaft direction, as is clear from Figures 2 - 4, both the side air intake valve openings 9b, 9c are positioned closer to the cylindrical axis A, while the center air intake valve opening is positioned farther away from the cylindrical axis A (on the opposite side of the cylindrical axis). In other words, as shown in Figure 8, the distance L1 from the side air intake valve openings 9b, 9c to a line B that is parallel to the camshaft and passes through cylindrical axis A, compared with the distance L2 to the center air intake valve opening 9a, is such that L2 > L1.

Also, the diameters of the contact areas (throat areas) Dic, Dis1, Dis2, De1, De2 between the below described valve heads 11d, 13c of the foregoing various valve openings 9a-9c, 10, 10b is such that Dic > De1 = De2 > Dis1 = Dis2. In other words, Dic : De1, De2 : Dis1, Dis2 = the relationship of large : mid-sized : small. Looking at the ratio of the cross sectional areas of the foregoing center, left and right side air intake valve openings 9a, 9b, and 9c, the cross-sectional areas are set so that 9a : 9b : 9c = 46 : 27 : 27.

The foregoing center, left and right side air intake valve openings 9a, 9b and 9c are opened and closed by the valve heads 11d of the center, left and right side air intake valves 11a, 11b and 11c. In addition, the foregoing exhaust valve openings 10a and 10b are opened and closed by the valve heads 13c of the exhaust valves 13a and 13b. The valve shafts 11e of the foregoing air intake valves 11a-11c and the valve shafts 13d of the foregoing exhaust valves 13a and 13b tilt outward at the prescribed angles. In this case, the angle subtended by the axial line B1 of the center air intake valve 11a with the cylindrical axis A is θ1, while that of the valve axes B2 of the left and right side air intake valves 11b, 11c with respect to the cylindrical axis is θ2, and these angles are set so that θ2 > θ1. To wit, the center air intake valve 11a is more erect than the left and right side air intake valves 11b, 11c.

In addition, the foregoing air intake valves 11a - 11c and exhaust valves 13a, 13b are held in the normally closed position by means of springs 14, 15 which are held in place by retainers 14a, 14a attached to the top end and to the middle of the valve stems 11e and 13d and by the spring seats 4c formed in the bottom wall 4d of the cam chamber C of the cylinder head 4. Double coil springs were used for the exhaust valve springs 15.

The foregoing air intake valves 11a-11c and the foregoing exhaust valves 13a and 13b are driven open and closed, respectively, by the air intake camshaft 16 and the exhaust camshaft 17. The foregoing air intake camshaft 16 and exhaust camshaft 17 run parallel to each other in a direction which is perpendicular to the plane of the paper in Figures 2 through 4. Said air intake and exhaust camshafts 16, 17 are axially supported and are free to rotate by means of removable air intake and exhaust cam carriers 20, 30, and air intake and exhaust cam caps 28, 29, which are removable from said carriers 20, 30.

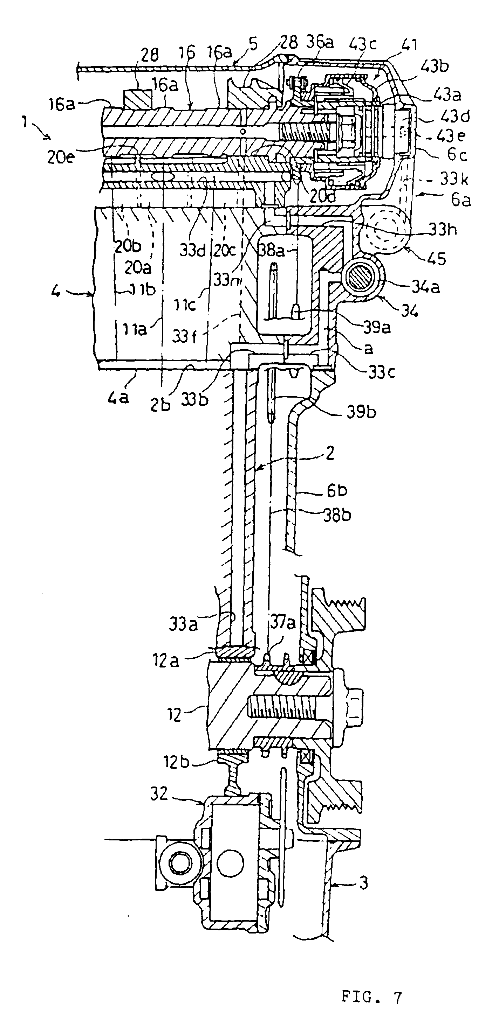

Air intake and exhaust timing gears 26a, 36b, capable of corresponding rotation, are attached to the front ends (the right end in Figure 7) of the foregoing air intake camshaft 16 and exhaust camshaft 17 and these are linked to a first intermediate gear 39a positioned on the front end of the cylinder head by the upper timing chain 38a, while a second intermediate gear 39b that is coaxial with said first intermediate gear 39a and rotates with it is linked by the lower timing chain 38b to the crank gear 37a on the aforementioned crankshaft 12. These are covered by the above mentioned head side cover 6a and the block side cover 6b. The diameters of the foregoing timing gears 36a, 36b and the crank gear 37a are the same, while the diameter of the first intermediate gear 39a may be either the same diameter as the timing gear 36a or a smaller diameter, and the diameter of the second intermediate gear 39b is larger than the diameter of the crank gear 37a. The inclusion of these intermediate gears 39a, 39b make it possible to drive the camshafts to rotate at 1/2 the speed of the crankshaft 12 without having to enlarge the diameter of the foregoing air intake and exhaust timing gears 36a, 36b.

Air intake and exhaust valve timing mechanisms 41, 42 are attached to the aforementioned front end of the foregoing air intake and exhaust camshafts to vary the timing of the opening and closing of the foregoing air intake and exhaust valves. In addition to these variable timing mechanisms 41, 42 being affixed to the cylinder casing 42b on the outside of a cylinder shaft 42a affixed to the front ends of the foregoing camshafts 16, 17, the design includes advancing and retracting pistons 43a between the two. The support shaft (outside end) 43d is inserted into the foregoing cylinder shaft 43a, and said support shaft 43d is supported by an outside edge support area on the above mentioned head side cover 6a, and the foregoing pistons 43c are operated by means of an oil introduction line 43e formed in said support shaft 43.

The foregoing piston 43 is advanced and retracted hydraulically in the foregoing variable valve timing mechanism 41, 42 which varies the relative angle (position) between the timing gears 36a, 36b and the camshafts 16, 17, thereby varying the opening and closing timing of the air intake valves 11a-11c and exhaust valves 13a, 13b.

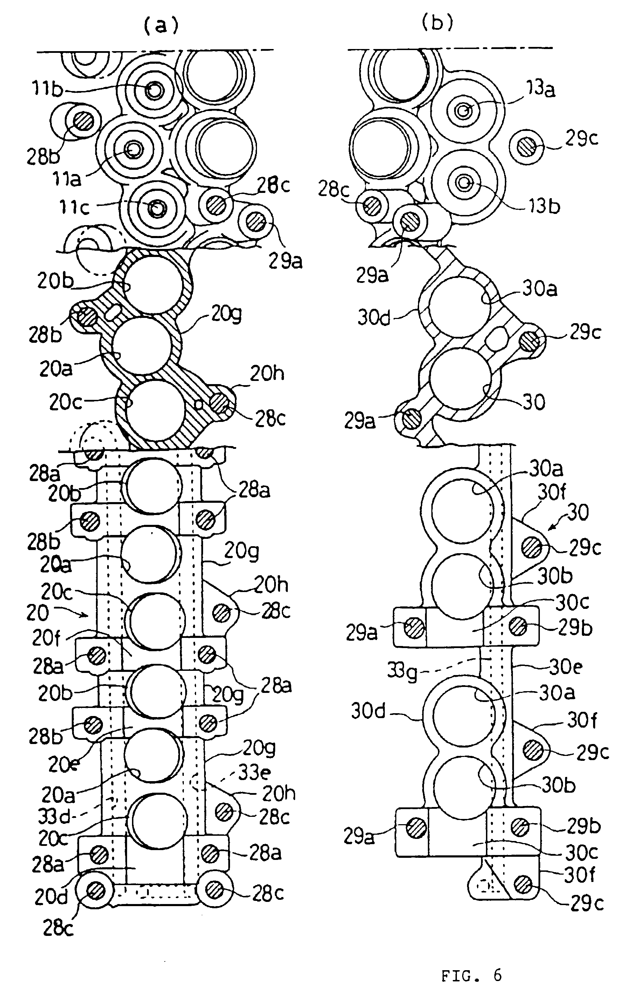

As shown primarily in Figure 6(a), the foregoing air intake cam carrier 20 is a rod-shaped structure extending in the axial camshaft direction, and it includes first bearings 20d formed at both ends in the camshaft direction, second bearings 20e formed in the space between the left and right air intake valves and the center air intake valve for each of the cylinders, and third bearings 20f which are formed in the border areas of each cylinder. These bearing areas 20d-20f are linked together as a unit by guide bosses 20g, 20g. Center, left and right lifter guide holes 20a, 20b, and 20c in these guide boss areas are formed coaxially with respect to the valve shafts 11e of the foregoing air intake valves 11a-11c. In addition, the cam caps 29 over the above described bearing areas 20d-20f are held in place by cap bolts 29a, 29b.

Here the cap bolts 29a positioned inside (on the cylindrical axis side) of the foregoing camshaft bearings 30c are of sufficient length to reach the boss areas 4f formed in the aforementioned cylinder head 4. Thus, by affixing the cam cap 29 by means of the bolt 29a, the exhaust cam carrier 30 is affixed at the same time to the top of the cylinder head 4. In addition, the flanges 30f which are formed on the axial ends and opposite the left and right exhaust valve positions of the foregoing passage boss 30d are also attached to the boss areas 4f formed on the cylinder head by means of attachment bolts 29c.

In the foregoing Figure 6(a) (b), the lower level Figure shows the cam caps removed from the air intake and exhaust cam carriers 20, 30, the middle level area shows the cross sections of the air intake and exhaust cam carriers 20, 30, and the upper level shows the top of the bottom wall 4d area of the cylinder head 4 with the air intake and exhaust cam carriers 20, 30 removed.

Center and right side air intake valve shutdown mechanisms 18a, 18b are located between the cam noses 16a of the aforementioned air intake camshaft 16 and the aforementioned center air intake valve 11a and the right side air intake valve 11c. Between the cam nose 17a of the exhaust camshaft 17 and the left exhaust valve 13a is located the exhaust valve shutdown mechanism 19. These air intake and exhaust valve shutdown mechanisms 18a, 18b and 19 are controlled operationally by a valve shutdown control means (ECU) not shown in the Figures. No valve shutdown mechanism is provided for the left side air intake valve 11b and the right exhaust valve 13b, and as a result, these valves are driven open and closed normally by the air intake camshaft 16 and exhaust camshaft 17 irrespective of the operating range.

The configuration of the foregoing center and right side air intake valve shutdown mechanisms 18a, 18b includes a plunger 24 which is advanced and retracted by oil pressure in the center and right side lifter guide holes 20a and 20c of the foregoing air intake cam carrier 20. Inside the left side lifter guide hole 20b, the open end of the cylinder is closed by a conventional lifter 21b comprising a pad 21k against which slides the cam nose 16a. The top end surface of the valve stem 11e of the foregoing left side air intake valve is in constant contact with the inside surface of the foregoing pad 21k.

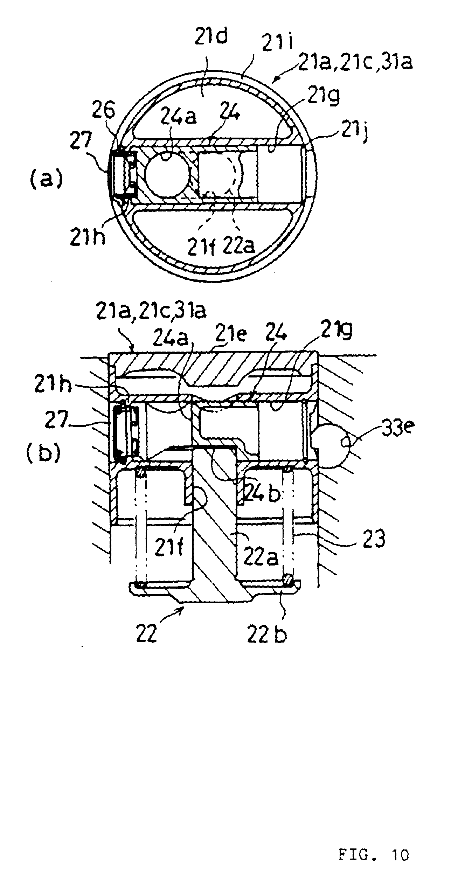

As shown in Figs. 10-12, pads 21e attached to the foregoing center and right side lifters 21a, 21c slide against the cam nose 16a of the foregoing camshaft 16 at the upper opening of the cylindrical unit which comprises a partitioning wall 21d located in the vicinity of its axial center. A boss area extends as a swell from the top surface of the foregoing partitioning wall 21d, and a cylinder hole 21g passes through it, perpendicular to said lifter. Both ends of this cylinder hole 21g issue into ring-shaped grooves 21i formed in the outer circumferential surface of lifters 21a, 21c, and the one end is sealed oil-tight by the cover member 21. A slide hole 21f is formed through the foregoing partitioning wall 21d which is perpendicular to the aforementioned cylinder hole 21g and coaxial with the foregoing air intake valves, and the inside surface of the foregoing pad 21e is opposite said slide hole 21f.

The rod 22a of the transmission member 22 is slidably inserted inside the foregoing slide hole 21f. The lower center surface of a flange area 22b formed on the bottom end of said transmission member is in contact with the top end surface of the valve stem 11e of the foregoing air intake valve. A spring 23 is mounted between the foregoing flange 22b and the foregoing partitioning wall to keep the lifters 21a, 21c in sliding contact with the cam noses 16a on the air intake camshaft 16.

A plunger 24 has been slidably inserted into the foregoing cylinder hole 21g. A ring-shaped projecting stopper 21a on the inside surface of cylinder hole 21g limits the forward end position of the plunger 24, while retainer ring 21j limits its rearward retraction position, and the return spring 26 applies force to maintain it in the normally retracted position.

An escape hole 24a of the same diameter as the foregoing slide hole 21f is formed in the foregoing plunger 24, and this escape hole 24 is such that it is coaxial with the foregoing slide hole 21f when the plunger 24 is in the retracted position. Furthermore a flat transmission surface 24b has been formed on the bottom side of the foregoing plunger 24; in the case of the air intake valve being closed (when the pad 21e is sliding against the base circle of the air intake camshaft) and when the plunger is in the advanced position, this transmission surface 24b lies opposite the top end of the rod area 22b of the foregoing transmission member 22 with the prescribed valve clearance inbetween.

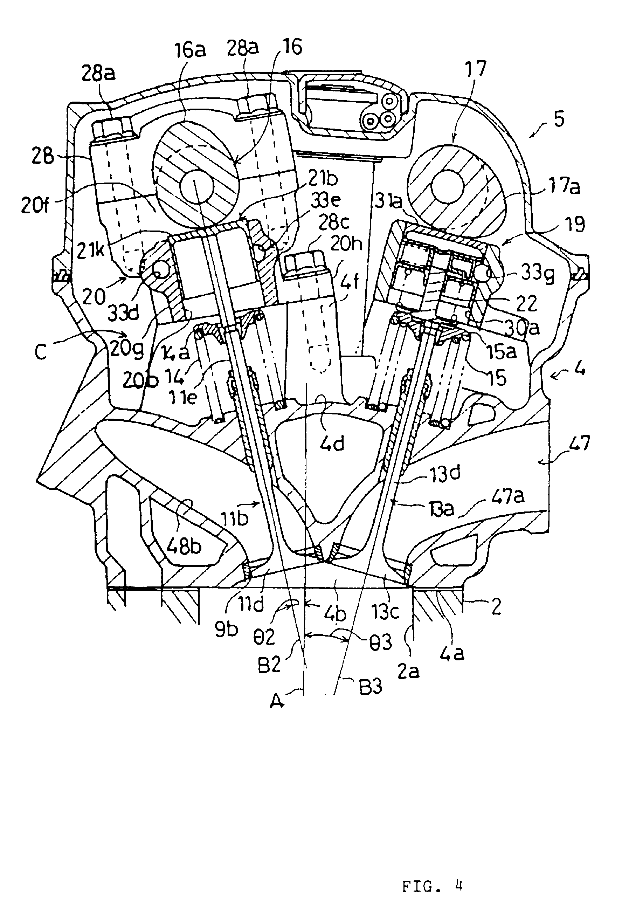

In addition, the valve shutdown mechanism 19 for the foregoing exhaust valves is of a similar configuration as the valve shutdown mechanism 18a, 18b for the foregoing air intake valves, but as shown in Figures 2 and 4, there is a shift toward the cylindrical axis of the exhaust camshaft with respect to the left and right exhaust lifters 31a, 31b, whereby the camshaft 17 is offset. This offset raises the opening speed of the exhaust valves 13a and 13b, making possible the utilization of high blowdown pressure for scavenging to improve scavenging efficiency. Both the exhaust camshaft 17 and the air intake camshaft 16 rotate in a clockwise direction.

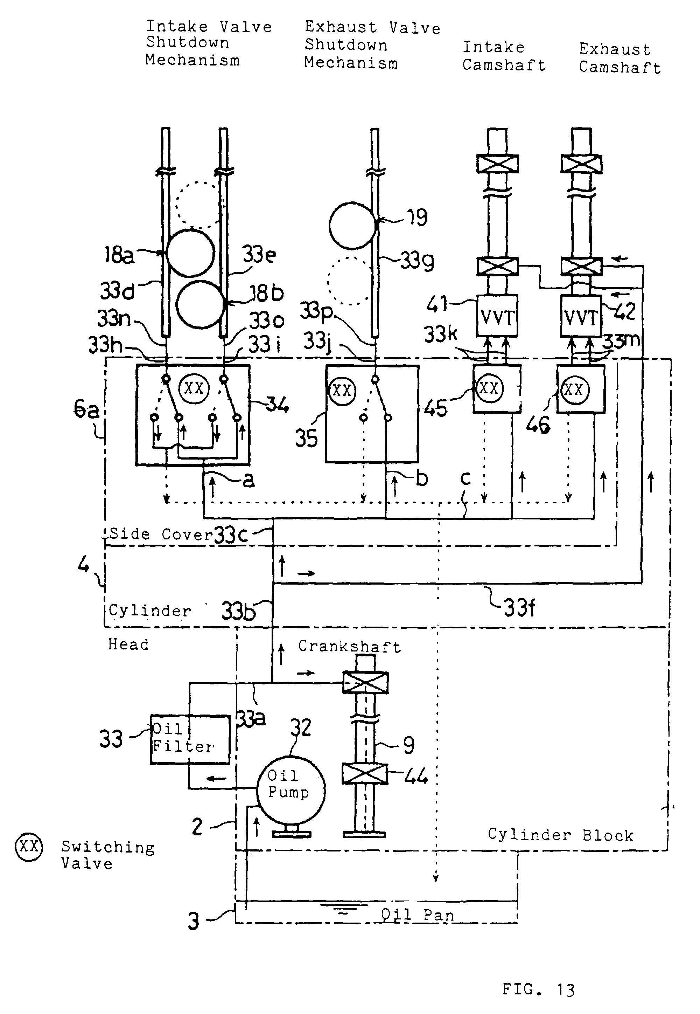

The configuration of the oil pressure supply system to the foregoing valve shutdown mechanisms 18a, 18b, 19, and the variable valve timing mechanisms 41, 42, are shown in Figures 7 and 13. To wit, the oil inside the oil pan 3 is drawn up by the oil pump 32 which moves it through the oil filter 33 and then through the cylinder block 2, cylinder head 4, head side cover 6, through the oil channels 33a-33c, and through 33i, 33o, and side oil passages 33e, and the foregoing center air intake valve shutdown mechanism 18a and the left side air intake valve shutdown mechanism 18b, and from switching valves 35 through the oil passages 33j, 33p, and oil passage 22g to supply the above mentioned left exhaust valve shutdown mechanism 19.

A part of the oil passing through oil passage 33a in the foregoing cylinder block 2 is supplied to the journal areas 44 of the crankshaft 12, and a part of the oil in oil passage 33b in the cylinder head 4 passes through the oil passage 33f formed in the cylinder head 4 and is supplied to the bearing areas 20d-20f, 30c of the camshafts 16, 17. Further, a part of the oil flowing through the oil passage 33 in the head side cover 6a is supplied to the foregoing variable valve timing mechanism 41, 42 through the switching valves 45, 46.

Here, as is shown in Figures 1 and 7, the oil passages from the oil pump 32 to the valve shutdown mechanisms and the variable valve timing mechanisms are common to the oil passage 33a inside the cylinder block 2 an oil passage 33b inside the cylinder head 4, but the oil passage 33c formed in the foregoing head side cover 6a has three branches a, b and c which pass through the valves 34a, 35a 45a and 46a of the above mentioned switching valves 34, 35, 45, and 46. The valve element inside said switching valves is advanced and retracted by solenoids 34b, 35b, 45b and 46b to switch the various passages.

The passages 33h, 33i and 33j from the valve units 34a, 35a of the switching valves 34, 35 of the foregoing valve shutdown mechanism further lead to the oil passages 33n, 33o and 33p in the cylinder head and are then connected to the oil passages 33d and 33e in the cam carriers 20, 30. Also, the oil paths 33k, 33m from the valve bodies 45a, 46a of the switching valves 45, 46 of the variable valve timing mechanism pass through the outside support 6c of the aforementioned head side cover 6a into the oil introduction passages 43e of the support shafts 43d of the variable valve timing mechanisms 41, 42.

The oil passages 33d, 33e located on the foregoing air intake side are parallel to the camshaft and open into the aforementioned oil groove 21a in contact with the center lifter guide hole 20a and the right side lifter guide hole 20c. In this case, the center and side air intake valves 11a and 11c slope at different angles θ1 and θ2 with respect to the cylindrical axis A, and are at different positions L2, L1 from a perpendicular to the camshaft. Accordingly, the tilt angle of the foregoing center lifter guide hole 20a is different from the right side lifter guide hole 20c, and they are resp. shifted in their respective directions to outside the direction perpendicular to the camshaft (opposite the cylindrical axis) and inside (on the cylindrical axis). As a result, with just the oil passages 33d and 33e running parallel to the camshaft in the air intake carrier 20, the oil passage 33d passes into the center lifter guide hole 20a and the oil passage 33e passes into the right side lifter guide hole 20c.

Here, the aforementioned oil passage 33e also passes into the left side lifter guide hole 20b, but since a conventional lifter 21b is slidably inserted into the left side lifter guide hole 20b, no problems are encountered because there is almost no loss of the foregoing oil pressure through the gap between the lifter 21b and the guide hole 20b.

In addition, the foregoing exhaust side oil passage 33g runs parallel to the camshaft through the inside the foregoing exhaust cam carrier and opens into the oil groove 21i at the point of contact with the aforementioned left lifter guide hole 30a. This exhaust side oil passage 33g also passes into the right lifter guide hole 30, and, as in the above mentioned air intake side, there is almost no loss of oil pressure.

The above mentioned exhaust valve openings 10a and 10b are connected to an opening 47c on the outside of the cylinder head 4 by means of left and right branch ports 47a, 47b of the exhaust port 47. Here, the dividing wall 47d between the left and right ports 47a, 47b may also be extended to the outside, as shown by the double-dotted line in Figure 8, to the vicinity of the aforementioned opening 47c. As will be described below, providing this extension improves the exhaust efficiency when the left exhaust valve 13a has been shut down.

Also, the aforementioned central air intake opening 9a, and the side air intake openings 9b, 9b,lead to the outside connection opening 48d of the cylinder head 4 by means of the center branch port 48a and the left and right side branch ports 48b, 48c of the air intake port 48. Here, the right partitioning wall 48f of the right branch port 48c extends farther on the upstream side than the left partitioning wall 48e of the left branch port 48b. As will be described below, this design facilitates the realization of stratified combustion.

A fuel injection valve 50 is present in the ceiling of the air intake manifold 49 connecting the foregoing external connection opening 48d. When viewed in the axial direction of the cylinder (see Figure 8), this fuel injection valve is positioned along the line that is the approximate extension of the foregoing left partitioning wall 48e, and its spray nozzle 50a passes through a spray hole 48f formed in the ceiling of the air intake port 48 and is directed to spray fuel toward the center air intake opening 9a and the left side air intake opening 9b.

Next, the operational effects of this first embodiment will be explained.

In the present embodiment, when the engine is running, the variable valve timing devices 41, 42 control the timing of the opening and closing of the air intake valves and exhaust valves, particularly in accordance with the magnitude of the air intake requirements. In addition, the valve shutdown mechanisms 18a, 18b, and 19 control the shutdown of the air intake and exhaust valves.

First, in the variable valve timing mechanisms 41 and 41, the switching valves 45 and 46 are switched by the oil pressure operating upon piston 43c. When their positions are changed, when said piston 43c moves to the left in Figure 7, the timing gears 36a and 36b and the air intake camshaft 16 and exhaust camshaft 17 change their relative positions to alter the timing of the opening and closing of the air intake valves 11a through 11c and the exhaust valves 13a, 13b.

In addition, in the valve shutdown mechanisms 18a, 18b, when the switching valve 34 is in the release shutdown position as shown by the solid line in Figure 13, oil pressure is supplied through oil passages 33d, 33e to the center air intake valve shutdown mechanism 18a and to the right side air intake valve shutdown mechanism 18b. As shown in Figure 10, the action of the oil pressure on the plunger 24 causes a forward motion that closes the slide hole 21f so that the transmission surface 24b on said plunger 24 is opposite the top end surface of the transmission rod 22a of the transmission member 22. The rotation of the camshaft 16 then causes the center and right side lifters 21a, 21c to be pushed downward and this action is transmitted to the center and right side air intake valves 11a and 11c through the plunger 24 and the transmission member 22 so that both of said air intake valves 11a and 11c open and close normally.

Or else, with regard to the valve shutdown mechanism 19, when the switching valve 34 is in the shutdown release position shown by the solid line in Figure 5, oil pressure is supplied to the right exhaust valve shutdown mechanism through the oil passage 33g, and in a manner similar to that described above, the left exhaust valve 13a is opened and closed in a normal fashion. Also, the left side air intake valve 11b and the right side exhaust valve also open and close normally.

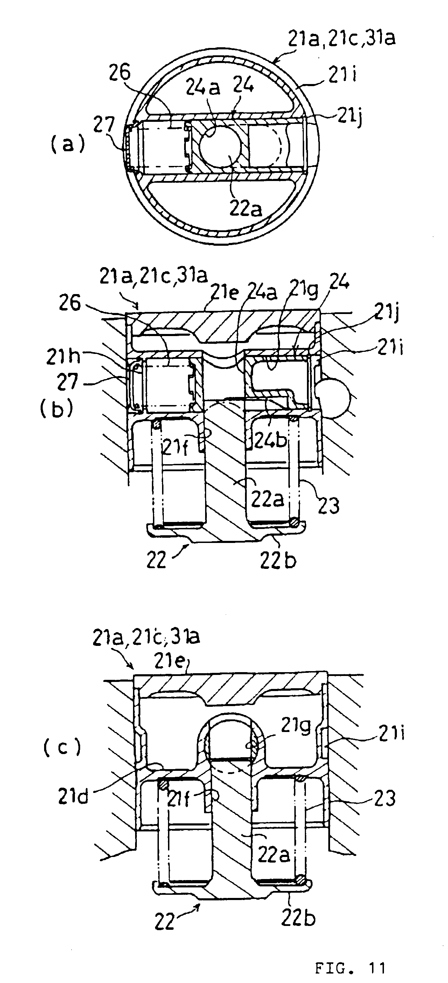

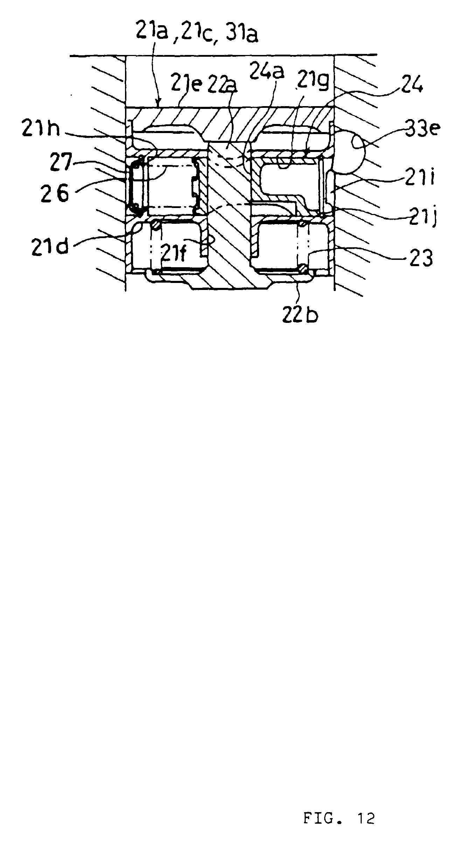

Then, when the switching valve 34 for valve shutdown switching is switched to the valve shutdown position shown by the broken line in Figure 5, the oil pressure decreases in oil passages 33d, 33e, and as shown in Figure 11, the plunger 24 is retracted by the return spring 26 so that the escape hole 24a in said plunger 24 lines up with the slide hole 21f, that is, the transmission rod 22a. When, as shown in Figure 12, the transmission rod 22a is advanced into the escape hole 24a, the rotation of the camshaft 16 causes the center and right side lifters 21a, 21c to be pushed downward, and the downward action of the lifters is not transmitted to the center and right side air intake valves 11a, 11c. Accordingly, both of said intake valves 11a and 11c are shut down, and remain in the closed position.

Here, with the above described valve shutdown operation wherein the air intake valves 11a and 11c were completely closed down, there might be concern that fuel buildup in the center and right side ports 48a, 48c may form carbon deposits, but in the present embodiment, even during the foregoing valve shutdown, when the foregoing lifters 21a, 21c descend to their maximum lift positions, the bottom surface of pad 21 pushes down slightly on the transmission rod, and this action slightly opens the foregoing air intake valves 11a and 11c.

In addition, when the valve shutdown mechanism 19 operates so that the switching valve 35 is switched to the shutdown position as shown by the broken line in Figure 5, the oil pressure inside oil passage 33g then will decline, and, similarly to the explanation above, the left exhaust valve 13a is shut down and maintained in a closed position. It is also possible to allow this left exhaust valve 13a to slightly open during valve shutdown.

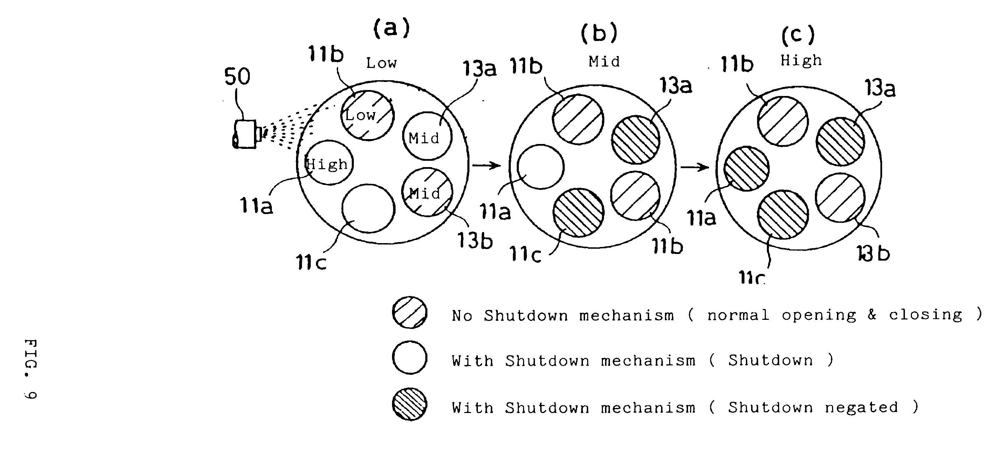

During engine operating ranges when there are low requirements for air intake such as low RPM operations or low load operations, the ECU generates switching signals which switch switching valves 34 and 35 into the shutdown position shown by the broken line in Figure 5. This action causes the oil pressure to decrease in oil passages 33d, 33e and 33g so that plunger 24 retracts, and, as shown in Figure 9a, the center and right side air intake valves 11a, 11c and the left side exhaust valve 13a are now put into the valve shutdown condition wherein just the left side air intake valve 11b and right exhaust valve 13b are opened and closed.

As a result, the air intake is of low diameter, Dis1, and the inflow is introduced from the cylindrical axis A perpendicularly to the camshaft over a short distance L1 on the cylindrical axis side, and further, there is inflow into the cylinder from the left side air intake valve opening 9b which lies on one side with respect to the camshaft direction. This arrangement essentially narrows the cross sectional area of the air intake passage and introduces a small amount of air into the cylinder at a high air flow speed and with a certain direction of flow so that a swirling flow is generated inside the cylinder to assure good combustion and to improve combustion stability with lean air/fuel mixtures.

Also, since only the left side air intake valve 11b and the right side exhaust valve 13, which lies on the opposite side of the cylinder, past the spark plug 25 (cylindrical axis A) sandwiched in-between, are operating, the inflow of air from the foregoing left side air intake opening 9b, after being burned, can be exhausted through the right exhaust valve opening 10b, which lies on the opposite side past the foregoing spark plug 25. To wit, the efficiency of the exhausting the exhaust gas is improved because it flows past the center of the combustion chamber. Incidentally, in the case of one each of the air intake valves and exhaust valves being opened and closed, and if it were, for example, the left air intake valve 11b and the left exhaust valve 13a that were so operated, there would be concern over exhaust gas turbulence being generated that would lower the exhaust efficiency.

As shown by the double-dotted line in Figure 8, an effective design to further improve the exhausting of the foregoing exhaust gases is to extend the partitioning wall 47d of the exhaust port 47 to the vicinity of the external connection opening 47c. In this case, the flow of the exhaust gases as described above becomes even smoother, thereby improving exhaust efficiency. In cases when the foregoing wall 47d is not extended and when only the right exhaust valve 13b is operating, the cross section of the right exhaust branch port 47b is effectively increased very rapidly, which could create a turbulence in the left exhaust branch port 47a, raising concern over lowered exhaust efficiency.

When operating at mid-level RPM and engine loads where a mid-level of air intake is required, switching signals generated by the ECU cause the switching valve 34 in oil passage 33d to retain its valve shutdown position (the broken line in Figure 5), but the oil passage 33e is switched to the shutdown release position (solid line in Figure 5), and the switching the valve 35 is switched to the shutdown release position as shown by the solid line in Figure 5. This action, as shown in Figure 9(b), causes only the center air intake valve 11a to be in the valve shutdown condition, while the left and right side air intake valves 11b, 11c and the left and right exhaust valves 13a, 13b are opening and closing.

As a result the air intake is directed toward the cylindrical axis over a short distance L1 perpendicular to the camshaft, and it flows into the cylinder from two areas on either side of the camshaft from the left and right side air intake valve openings 9b, 9c. The foregoing two swirl components merge and create a tumbling action along the cylindrical axis which improves combustion, and as a result, improves combustion stability with lean air/fuel ratios. In this case, in the present embodiment, the center air intake valve 11a is of large diameter, while the left and right side air intake valves 11b, 11c are of a smaller diameter, thereby further shortening the above described length L1 in the direction perpendicular to the camshaft, in other words, the left and right side air intake valve openings 9b, 9c can be located even closer to the cylindrical axis A but toward the outside in the camshaft direction, whereby the inflows are reliably generated with a cylindrical axis directionality.

During periods of high air intake requirements such as high RPM or high load operations, the switching signals generated by the ECU cause the switching valve 34 in oil passage 33d to be switched to its shutdown release position as well, causing the valve shutdown activities to be negated on all valves, and enabling all the air intake valves and exhaust valves to open and close normally.

The result is that the intake air comes in from the center, left and right side air intake valve openings 9a-9c, and in this case, the air intake is maximized, without being hampered for example by the flow drag that was caused in the prior art due to the need to have an intake control valve mounted in the air intake port 47.

In the present embodiment, the right partitioning wall 48f extends toward the fuel injection valve, and said fuel injection valve is positioned near the left partitioning wall 48e so that the air intake from the center and left side air intake valve openings 9a and 9b is mixed with fuel, but the air intake from the right side air intake valve opening 9c has almost no fuel mixed with it, thereby making that intake primarily air. As a result, there is stratification inside the combustion chamber between the air/fuel mixture and the air alone, enabling so-called stratified combustion to take place.

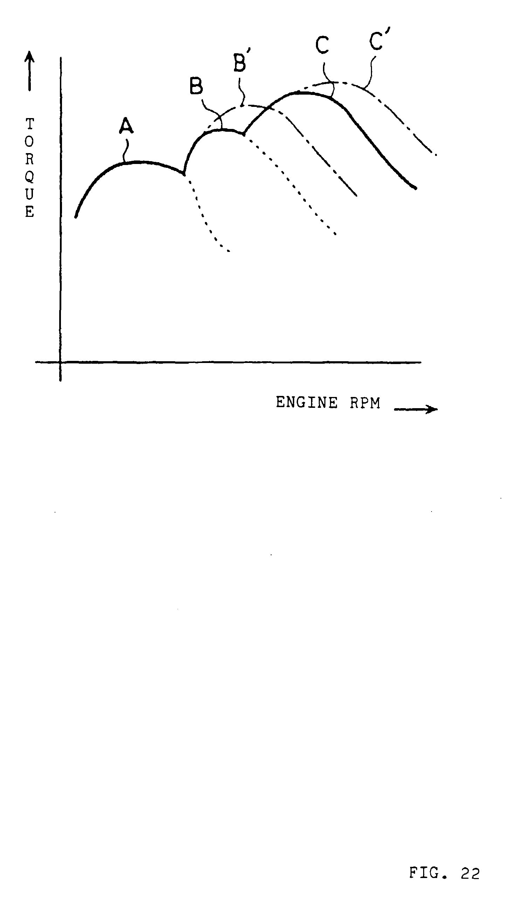

Figure 22 is a graph of engine RPM vs torque which will be used to explain the torque enhancing effect derived from the valve shutdown operations of this invention. In the Figure, curves A, B and C represent low, mid-level, and high air intake operating ranges, and these conceptually show the torque characteristics.

The design that is used to implement the above described valve shutdown operations in the present embodiment involves incorporating the valve shutdown mechanism into the air intake cam carrier 20 and the exhaust cam carrier 30, which are removable from the cylinder, thereby making possible a simple configuration for the oil pressure supply system to the valve shutdown mechanism. To wit, each of the cam carriers 20 and 30 are separate units, and making the holes for oil passages 33d, 33e and 33g is a simple operation. Incidentally, in cases when the valve shutdown mechanism would be unitized with the cylinder head, the oil passages would have to be put through the cylinder head 4 in the outer wall in the camshaft direction (the wall forming the cam chamber), or, perpendicularly to the cam chamber where branch passages would have to made. Such an approach would make the oil pressure supply system overly complex, and make the cylinder head larger and heavier, and detract from its handling properties in the areas where it was necessary to drill holes.

In the present embodiment, differing tilt angles have been used for the center lifter guide hole 2a and the right lifter guide hole 20c and their position has been shifted relative to the perpendicular from the camshaft, whereby oil passages 33d and 33e can run parallel to the camshaft, and, by merely making an opening around the guide holes 20a and 30c, the oil pressure can be supplied to the center air intake valve shutdown mechanism 18a and the right side air intake valve shutdown mechanism 18b independently. Incidentally, in cases when the tilt angles of both guide holes 20a and 20c are designed to be the same, it is necessary to locate the oil passage at some distance from the guide holes 20a, 20c, or to provide branch passages from said oil passages in a direction perpendicular to the camshaft, and thereby the configuration will be more complex.

In the present embodiment, the oil passage 33c passes through the head side cover 6a, and in addition, said oil passage branches inside the head side cover 6a into an oil passage servicing the valve shutdown mechanism and an oil passage servicing the variable valve timing mechanism, thereby making it possible to place the switching valves 34, 35 for the valve shutdown mechanism and the switching valves 45, 46 for the variable valve timing mechanism in the head side cover 6a. In this case, the oil passage 33f which supplies lubricating oil to the bearings, etc. of the camshafts 16, 17 can be formed in the cylinder head 4. As a result, the specifications do not change for the cylinder head 4, even for engines lacking the valve shutdown mechanism, thereby allowing the use of more common parts and not requiring design changes such as forming the aforementioned oil passage 33c in the head side cover.

In the present embodiment, there is a dead space located inside the head side cover 6a that is below the variable valve timing mechanism 41, 42 and that may be used for the location of the above mentioned various switching valves 34, 35, 45, 46, thereby avoiding any need to increase engine size to find space for the switching valves.

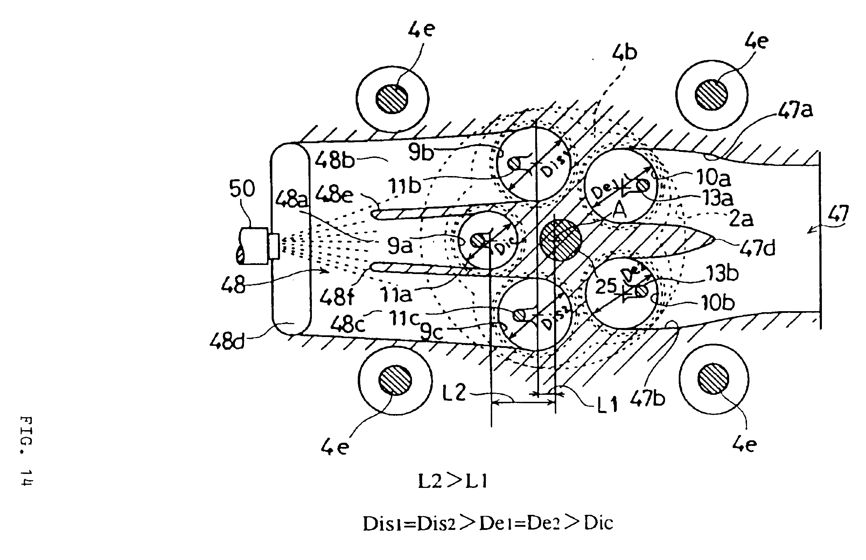

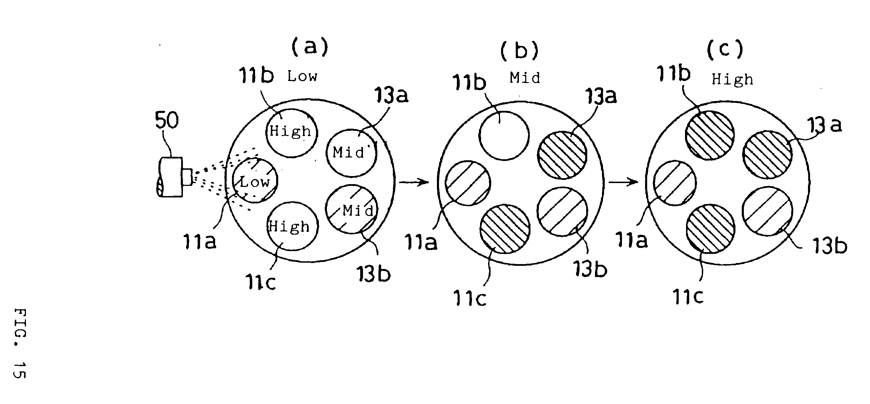

Figures 14 and 15 will be used to describe an additional embodiment of the invention (a second embodiment). In the Figures, parts identical or corresponding to those in Figures 8 and 9 will bear the same reference numbers.

In this second embodiment, the valve diameter Dic of the center air intake valve 11a, the valve diameters Dis1, Dis2 of the left and right side air intake valves 11b, 11c, and the valve diameter De1, de2 of the left and right exhaust valves 13a, 13b are set to satisfy the following relationship: Dis1 = Dis2 > De1 = De2 > Dic. In other words, the center air intake valve 11a has the smallest diameter.

In addition, the length L2 from the center air intake valve 11a to a perpendicular from the camshaft to the cylindrical axis A, and the length L1 from the left and right side air intake valves 11b, 11c to a perpendicular from the camshaft to the cylindrical axis A are set to satisfy the following relationship: L2 > L1.

The fuel injection valve 50 is located along the axial line of the air intake port 48, and the left partitioning wall 48e of the air intake port 48 is set to the same length as the right partitioning wall 48f. In this case, the upstream ends of the left and right partitioning walls 48e, 48f are located at some distance from the foregoing fuel injection valve 50, which causes the fuel from the fuel injection valve 50 to be directed toward, and be fed, not just to the center air intake valve opening 9a, but to the left and right side air intake valve openings 9b, 9c as well.

The valve shutdown mechanism on the air intake side is designed to have the ability to shut down either the left or right side air intake valves 11b, 11c, or both. The valve shutdown mechanism on the exhaust side is designed to have the ability to shut down the left exhaust valve 13a. No valve shutdown mechanism is provided for the center air intake valve 11b or for the right exhaust valve 13b; accordingly both of said valves 11b, 13b open and close normally.

In this case, having the ability to shut down either the left or right side air intake valves 11b, 11c requires independent oil passages. To provide these independent oil passages, two oil passages may be formed in the above mentioned air intake cam carrier 20 running parallel to the camshaft and at some distance from the left and right side lifter guide holes 20b, 20c, with branched oil passages from said oil passages connecting to the lifter guide holes 20b, 20c.

In this second embodiment, during periods of low air intake requirements as shown in Figure 15(a), the left and right side air intake valves 11b, 11c, and the left exhaust valve 13a, are shut down, and only the center air intake valve 11a and the right exhaust valve 13b open and close. As a result, all the air intake flows into the cylinder from the smallest diameter center air intake valve opening 9a, and the speed of that flow increases in proportion to the reduction of the cross sectional area of the inflow. Also, since the intake air flows into the cylinder from said center air intake valve opening 9a, which is the most distant from the cylindrical axis, there is no disturbance of the direction of the flow caused by flows from the opposite direction, thereby assuring the generation of a strong flow in the cylinder and stabilizing the combustion of lean air/fuel mixture ratios.

In addition, since the fuel injection valve located in the center of the air intake port 48 provides intake air mixed with fuel that is directed toward center air intake valve opening 9a and the spark plug 25 which is located near the cylinder axis, the mixture is concentrated in the area of the spark plug, thereby stabilizing the combustion of lean air/fuel mixture ratios. Also, in this embodiment, since the diameter of the center air intake valve opening is set to be the smallest of all the openings, the spark plug can be shifted nearer the center air intake valve opening 9a to further improve combustion properties.

During periods of mid-level air intake requirements, as shown in Figure 15(b), operational shutdown is negated on the right side air intake valve 11c and the left exhaust valve 13a so that only the left side air intake valve 11b is shut down. As a result, there are inflows of the intake air from the center air intake valve opening 9a and the right side air intake valve opening 9c, whereby the flow in the cylindrical axial direction (tumble) and the flow along the inner cylindrical surface (swirl) are synthesized into a diagonal swirl, and this design further stabilizes the combustion of lean air/fuel mixture ratios.

During periods of high air intake requirements, as shown in Figure 15(c), the inflow cross section is increased by the operation of the center and the left and right side air intake valves 11a-11c, and since there is no drag inside the air intake passage, the air intake is increased to a maximum air intake rate.

Further, in this embodiment, since the center air intake valve 11a is of the smallest diameter, it is possible to make smaller, the relief means in the crown surface of the piston 7 that eliminates interference between the piston 7 and the valve head 11d of said center air intake valve 11a. Incidentally, since the center air intake valve is at the lowest position in the combustion chamber, and thereby the likelihood of interference between it and the top of the piston is increased, the prior art comprised a large relief area opposite the center air intake valve cut into the top surface of the piston, but this relief means caused the strength of the crown area of the piston to decline. This embodiment of the invention however, resolves this problem.

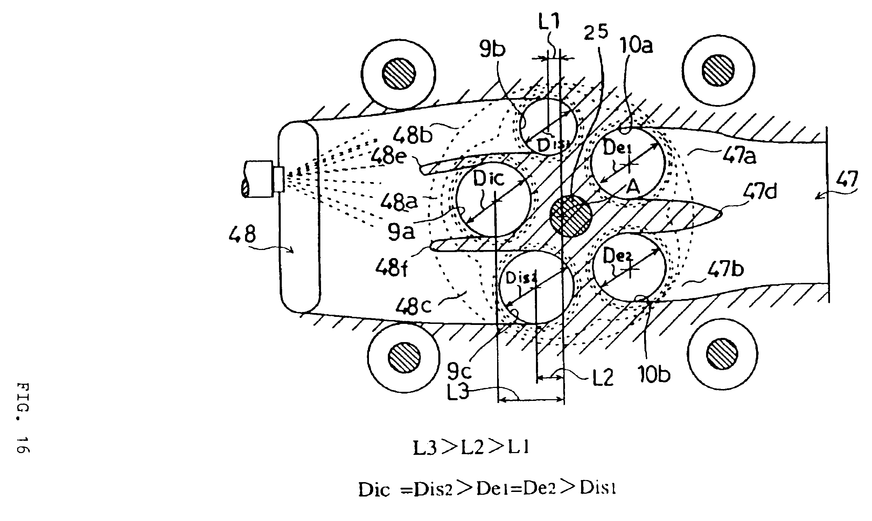

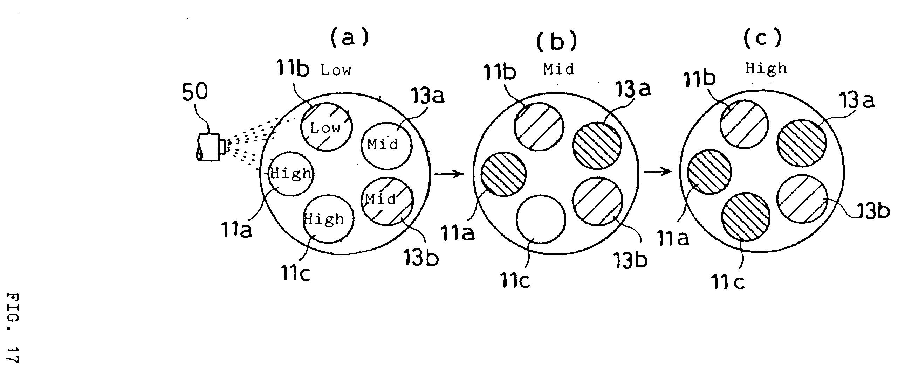

Figures 16 and 17 will be used to describe another embodiment (a third embodiment) of the engine air intake device.

In the Figures, parts conforming to those in Figures 8 and 9 bear the same reference numbers.

In this third embodiment, the diameter ratios have been set so that the diameter Dic of the center air intake valve 11a, the diameter Dis1, Dis2 of the left and right side air intake valves 11b, 11c, and the diameter De1, De2 of the left and right exhaust valves 13a, 13b satisfy the following relationship: Dic = Dis2 > De1 = De2 > Dis1 . In other words, the left side air intake valve opening 9b evinces the smallest diameter.

In addition the length relations have been set so that the length L3 from the center air intake valve 11a to the perpendicular to the camshaft from the cylindrical axis A, the length L2 from the right side air intake valve 11c to the foregoing perpendicular to the camshaft, and the length L1 from the left side air intake valve 11b to the foregoing perpendicular to the camshaft are set to be: L3 > L2 > L1. In other words, the above described distance differs for all three air intake valves.

In addition, the fuel injection valve 50 has been positioned along a line extending from the left partitioning wall 48e of the air intake port 48, and the left partitioning wall 48e is the same length as the right partitioning wall 48f in the air intake port 48. In this case, the upstream ends of the left and right partitioning walls 48e, 48f are located at some distance from the fuel injection valve 50, and as a result, the fuel from the fuel injection valve 50 is primarily directed at the center air intake valve opening 9a and at the left side air intake valve opening 9b.

The valve shutdown mechanism on the air intake side is designed to have the ability to shut down either one or both of the center air intake valve 11a and right side air intake valve 11c at the same time. The valve shutdown mechanism on the exhaust side is designed to be able to shut down the left exhaust valve 13a. No valve shutdown mechanism has been provided for the left air intake valve 11b or the right exhaust valve 13b, and accordingly, both valves 11b, and 13b open and close normally.

In this third embodiment, during periods of low air intake requirements, as shown in Figure 17(a), the center air intake valve 11a, and the right side air intake valve 11c, along with the left side exhaust valve 13a, are shut down, and only the left side air intake valve 11b and the right exhaust valve 13 b are opened and closed. As a result, all the air intake flows into the cylinder through the smallest diameter left side air intake opening 9b, with the inflow speed being raised in proportion to the reduction of the cross sectional area of the inflow. Also, since the intake air flows into the cylinder from the above mentioned left side air intake valve opening 9b, which is closest to the cylindrical axis and located farthest to the outside of the cylinder in the camshaft direction, it is a strongly directional flow that is not disturbed by flows from the other side. As a result, a strong swirling flow is generated inside the cylinder which provides stable combustion for lean air/fuel mixture ratios.

During periods of mid-level air intake requirements, as shown in Figure 17(b), the valve shutdown is negated on the center air intake valve 11a and on the left exhaust valve 13a, so that only the right side air intake valve 11b is shut down. As a result, the intake air flows in through the center air intake valve opening 9a and the left side air intake valve opening 9b, creating flows that tumble in the axial direction of the cylinder and that swirl along the inside wall of the cylinder, merging into a diagonal swirl stabilizing the combustion of lean air/fuel mixture ratios.

Also, during periods of high air intake requirements, as shown in Figure 17(c), the center, left and right side air intake valves 11a-11c are all operating to increase the cross-sectional area of the inflow, and because the air intake passage is free of drag on the inflow, the maximum air intake volume is thereby increased.

Figure 8 will be used to explain another embodiment of the invention (a fourth embodiment); parts in that Figure identical to or corresponding to those in Figure 9 will bear the same reference numbers.

In this fourth embodiment, the relationship between the diameters of the air intake and exhaust valves, the position of the fuel injection valve 50, and the shape of the left and right partitioning walls 48e and 48f are the same as shown in Figure 14. However, on the air intake side, the valve shutdown mechanisms only makes it possible to shut down the operation of the center air intake valve 11a on the air intake side, and of the right exhaust valve 13b on the exhaust side.

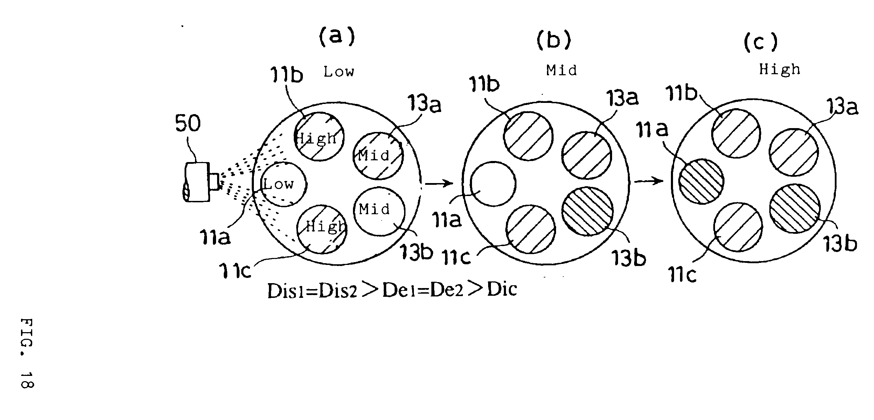

In this fourth embodiment, during periods of low air intake requirements, as shown in Figure 18 (a), the center air intake valve 11a and the right exhaust valve 13b are shut down so that intake air flows in through the left and right side air intake valve openings 9b, 9c, and exhaust gas is expelled through the left exhaust valve 13a. Thus, the intake air enters the cylinder from the left and right side air intake valve openings 9b, 9c on the left and right sides of the cylinder axis to facilitate the generation of a tumbling action within the cylinder.

During periods of mid-level air intake requirements, as shown in Figure 18(b), the center air intake valve 11a continues to be shut down, while the shutdown is negated on the right exhaust valve 13b. Hence a relatively large amount of intake air generates a tumbling action, as described for the above periods of low air intake, due to the inflows from the left and right side air intake valve openings 9b, 9c. In this case, since both exhaust valves are operating, the exhausting of the exhaust gases is thereby improved.

Further, during periods of high air intake requirements, all the air intake valves are operating to assure an adequate maximum air intake volume.

In the above first through fourth embodiments, the valve shutdown took place in the absence of oil pressure, and the valve shutdown was negated when oil pressure was present; however, the design also may be in the reverse manner whereby the presence of oil pressure could shut down the valves, and its absence could release them from the shutdown position. With this type of configuration, it is possible to provide a valve shutdown mechanism for all the valves, thereby increasing design latitude.

To wit, by using a design whereby the valve shutdown would be negated in the absence of oil pressure, between the time when the engine is started and oil pressure is generated, all the valves would operate normally irrespective of whether or not they are equipped with a valve shutdown mechanism. Incidentally, as in the example of the foregoing embodiments when the presence of oil pressure is required to negate the valve shutdown, if a shutdown mechanism is provided for all the valves, it may sometimes be impossible to start the engine, so at least one of the air intake valves and one of the exhaust valves must be left without a valve shutdown mechanism. Thus, in the foregoing examples, the valve shutdown mechanism was omitted for at least one each of the air intake and exhaust valves.

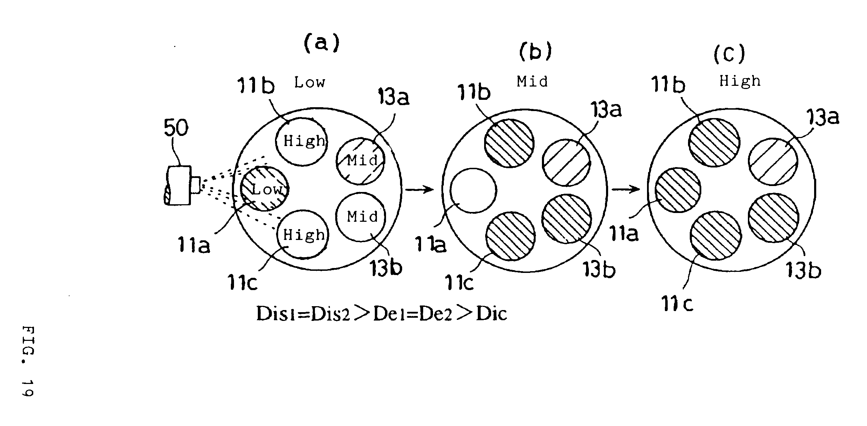

Figure 19 will describe an additional embodiment (5th embodiment).

In the Figure, the reference numbers indicate parts that are identical with or correspond to those in Figure 9. In this Example, the valve shutdown is negated by the absence of oil pressure, and the shutdown mechanism has been provided for all the air intake valves 11a-11c.

In this fifth embodiment, the valve diameter relationships among the various air intake valves and exhaust valves, the position of the fuel injection valve 50, and the shape of the left and right partitioning walls 48e, 48f have been selected as shown in Figure 14. On the other hand, the valve shutdown mechanism on the air intake side has been designed so that any one of the center air intake valve 11a or the left and right side air intake valves 11b, 11c can be shut down. On the exhaust side, only the right exhaust valve 13b has been equipped with a valve shutdown mechanism to enable its operation to be shut down.

In this fifth embodiment, in the interval between engine start and oil pressure generation, all the valve shutdown mechanisms are negated, and all the valves open and close normally so that starting is in no way impaired. Then, during periods of low air intake requirements, as shown in Figure 19(a), the left and right side air intake valves 11b, 11c, and the right exhaust valve 13b are shut down, with the center air intake valve 11a being negated. As a result, air flows in through the center air intake valve opening 9a, and exhaust gas is expelled through the left exhaust valve 13a. In this manner, the air is taken in through the smallest diameter center air intake valve opening 9a, which is positioned most distant from the cylindrical axis A, thereby increasing the air inflow speed, imparting assured directionality, generating a strong flow in the cylinder, and stabilizing the combustion of lean air/fuel mixture ratios.

Also, in this case, the mixture is concentrated into the vicinity of the spark plug 25, thereby stabilizing the combustion of lean air/fuel mixture ratios. Also, since the center air intake valve opening 9a is designed to have the smallest diameter, it is possible to position the spark plug 25 closer to the center air intake valve opening 9a to further improve combustion properties.

During periods of mid-level air intake requirements, as shown in Figure 19(b), the center air intake valve 11a is shut down, while the shutdowns of the left and right side air intake valves 11b, 11c, and on the right exhaust valve 13b are negated. In performing this switching, it is preferred that the left and the right side air intake valves 11b, 11c be negated while the center air intake valve is in an operating status, and that the center air intake valve 11a be shut down thereafter. This feature would dampen any shock that would occur during switch over.

Due to the negate of the left and right side air intake valves 11b, 11c, a comparatively large amount of intake air enters the cylinder from the left and right side air intake openings 9b, 9c, and a tumble such as described for the foregoing case during low air intake periods is generated. In this case, both the exhaust valves are operational, and the exhaust gas is reliably expelled.

Further, during periods of high air intake requirements, all the air intake valves are operational to assure an adequate maximum air intake volume.

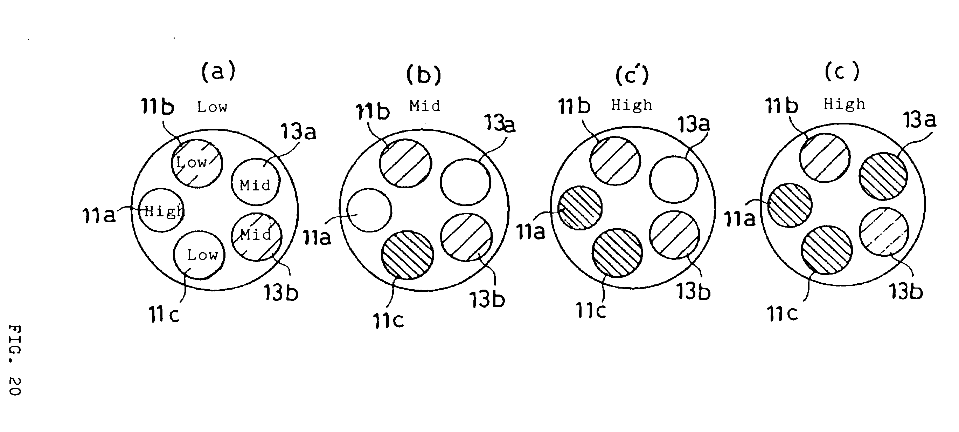

Figure 20 shows a modification of the valve shutdown control of the foregoing first embodiment. In this modified example, during periods of low air intake requirements (see (a) of that figure) valve shutdown control is provided as in the foregoing first embodiment, but during periods of mid-level and high air intake requirements, the control is different. To wit, during mid-level air intake requirement periods, as shown by (b) in that same figure, the left exhaust valve 13a is shut down, and during high air intake requirement operations, a distinction is made between the operating ranges wherein a comparatively smaller air intake volume is required and the ranges wherein a high air intake volume is required. In those operating ranges where a comparatively low air intake volume is required, as shown in (c') of that figure, the center air intake valve 11a is negated, and the shutdown of the right air intake valve 13a is continued. Then, in operating ranges where high air intake volumes are required, all valves are opened.

The above described structure operates just one of the exhaust valves during the front half of the aforementioned operating range requiring high air intake volumes so that the equivalent pipe length for the exhaust pipe in the high air intake operating range is effectively lengthened, as shown by the double dotted line in Figure 22 for the torque curve C', and the torque is further improved during the high RPM operating ranges (high air intake requirement operating ranges).

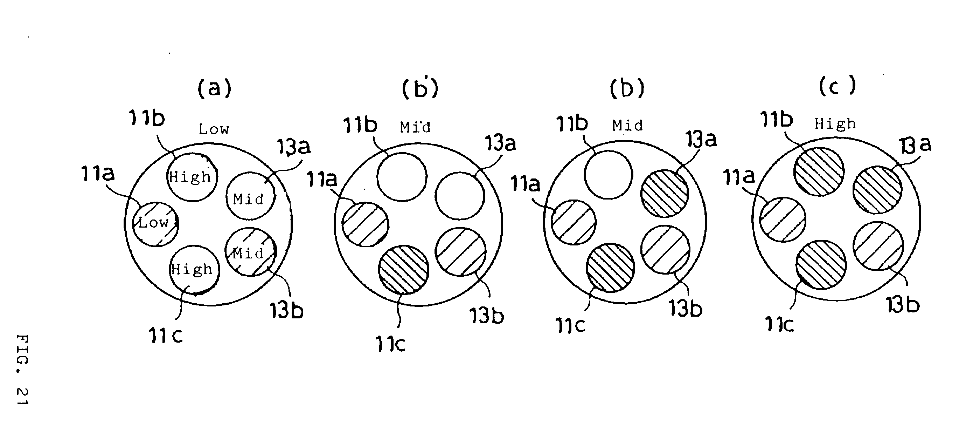

Figure 21 shows a modification of the valve shutdown control for the foregoing second embodiment. In this modified embodiment, during periods of low air intake requirements (see (a) of that figure), namely a period of high air intake requirements (see (c) in that figure), the shutdown control is performed in the same manner as it was for the foregoing second embodiment, but the control differs during periods of mid-level air intake requirements. To wit, the mid-level air intake operating range is divided into one with comparatively low, and another with comparatively high, air intake requirements. As shown by (b') in the same figure, during the comparatively low air intake requirement range, the center air intake valve 11a and the right side air intake valve 11c and the right exhaust valve 13b are the only ones operational, and the left exhaust valve 13a continues to be shut down. Then, when moving to the range for comparatively higher air intake requirements, just as in the foregoing second embodiment, the left exhaust valve 13a becomes operational as well.

With this type of structure, during the front half of the above described operating range requiring mid-level air intake, just one of the exhaust valves is operating so that the equivalent pipe length for the exhaust pipe in the mid-intake operating range is effectively lengthened, and as shown by the double dotted line in Figure 22 for torque curve B', the torque is further improved during mid-RPM operations (mid-level air intake requirement levels).

The foregoing embodiments all pertained to five-valve engines with three air intake valves and two exhaust valves, but this invention can also be applied to engines with two, or four or more air intake valves which are divided between intake valves close to the cylindrical axis and those opposite the cylindrical axis.

Also, in the foregoing embodiments, the valve lift curves for the air intake valves and exhaust valves were set according to the valve diameters as described below, and to make possible the above described valve shutdown control.

For example, the maximum lift for a small diameter valve is set to be smaller than the maximum lift for a large diameter valve. Thus, in addition to the effectiveness obtained by using the above described small diameter valve, and by incorporating a valve shutdown controller, the following effects are derived. To wit, the diameter of the lifter for the small diameter valve may be decreased by the amount that the maximum lift is decreased for that small diameter valve to provide the space for increasing the lifter diameter for the large diameter valve, and to allow for the increased lift of the large diameter valve. This in turn enables the ratio between the flow rates (dynamic range), that is the flow volume when the large diameter valve is shut down, to the flow volume when the small diameter valve is shut down, to be increased. As a result, the flows inside the cylinder during periods of low air intake requirements can be strengthened, and the maximum intake volume needed for periods with high air intake requirements can be further increased. In addition, this arrangement avoids the excess lift that is normally provided for the small diameter valve. To wit, increasing the lift for the small diameter valve beyond that required has no effect on increasing the flow volume.

In addition, the above described variable valve timing device can be used or the shape of the cam noses can be designed to alter the valve opening and closing timing when the engine is operating at low RPM ranges to diminish the overlap between the exhaust valves and the air intake valves. This can be accomplished by speeding the closing timing for the exhaust valves and delaying the opening timing for the air intake valves. By so diminishing the overlap in low RPM operating ranges, it is possible to improve low RPM range fuel consumption, to stabilize idling and raise the low speed torque.

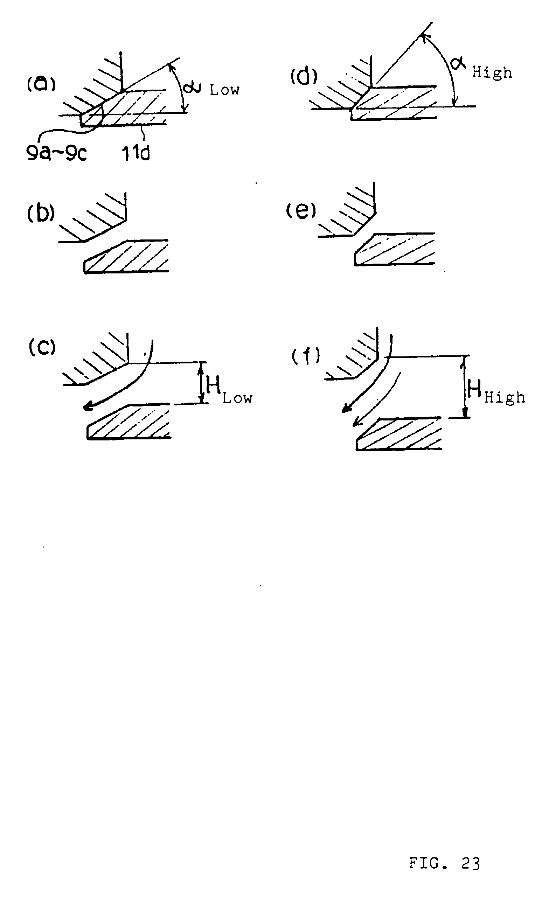

Further, the foregoing embodiments utilized differing valve diameters to obtain various operational effects, but similar effects could be obtained as well without changing the valve diameter, instead varying the lift and the seat angle α as shown in Figure 23.

For example, as is shown in Figure 23, if the valve diameters in the foregoing examples were all the same, a low lift and the above described small seat angle α could be used on the valve (air intake valve) position where a small valve would have been used, and a higher lift and a larger aforementioned seat angle α could be used for the valves (air intake valves) in the position where the larger diameter valves would have been located. By combining this feature with the valve shutdown mechanism described for the foregoing embodiments, a similar effectiveness to that obtained from the foregoing embodiments could be obtained for the following reasons.

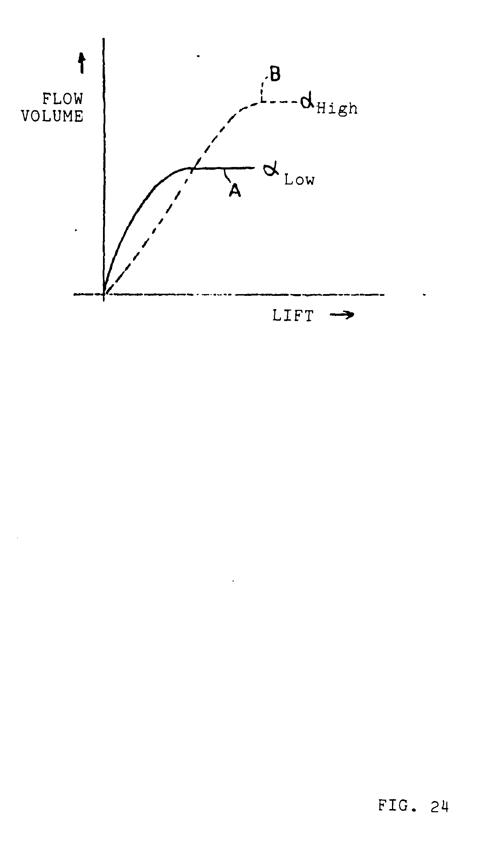

The present inventors have experimentally confirmed that if the lift is H, then the effective cross sectional area of the opening, and by extension, the flow volume, is proportional to Hcosα. To wit, as shown in Figure 24, as α becomes smaller (see curve A) there is an initial rapid increase (at low lift levels, see Fig. 23 (b)) in the flow volume, and even if the lift is increased, the bend drag dictates that the flow volume does not increase more (see Fig. 23 (c)). On the other hand, if α is large (see Curve B), the initial increase in the cross sectional area of the opening due to the valve opening is slow, and the increase in flow volume is also comparatively slow (see Fig. 23 (e)), and as the amount of lift increases the flow volume increases only through the areas with a low bend drag (see Fig. 23 (f)).

Thus, when α is small and there is low lift, the situation is equivalent to having a smaller diameter valve, and when a is large and there is high lift, it is equivalent to a larger diameter valve, and as described above, the converse is true. Moreover, in the present case where the diameters of all the valves are the same, manufacturing can be simplified by only using different seat angles α. Also, by using low lift on the foregoing low seat angle α valve, a high lift area can be used for the high seat angle α valve, and in either case the air intake coefficient remains high and there is good air intake efficiency.

According to the above embodiments by providing a fuel injection valve which supplies mists of fuel directed at one or a plurality of air intake openings, and by providing a valve shutdown mechanism which can shut down some of the air intake valves, then, the shutdown of the valves being controlled based upon the engine operating status and the fuel injection conditions, during periods of low air intake requirements, some of the air intake valves can be shut down to focus all the intake air into some of the air intake openings, thereby assuring reliable flows within the cylinder. In this case, since the fuel injection condition was assumed along with the intake valves to be shut down, it was possible to supply an appropriate amount of fuel injection and to achieve stabilized combustion.

Also, during periods of high air intake requirements, by negating the shutdown on all the valves, air is introduced into the cylinder from all the valves, thereby effectively increasing the maximum air intake volume.

When during periods of low air intake requirements, the first and second air intake valves are shut down and only the center air intake valve opening is used for air intake, and when the fuel is injected primarily toward the central air intake opening, in addition to the generation of a reliable tumbling action, the air/fuel mixture is at a relatively rich concentration in the vicinity of the spark plug, which stabilizes combustion. Also, during periods of mid-level air intake requirements, the first side air intake valve is shut down so that the inflow is confined to that from the center air intake valve opening and from the second side air intake valve opening, the tumble from the center air intake valve and the swirl from the side air intake valve being combined to effectively generate a diagonal swirl. During periods of high air intake requirements, the effect is to increase the maximum air intake volume.

Since the fuel is injected primarily toward the center air intake valve opening, the air/fuel mixture in the intake flow from this center air intake valve opening contains a great deal of fuel, while that from the first and second side air intake openings contains little fuel, thereby aiding in stratified combustion and stabilizing the combustion of lean air/fuel mixture ratios.

On the other hand, when the foregoing center air intake valve and the second side air intake valves are shut down the air intake is confined to that from the first side air intake valve opening, in order to reliably generate a swirl; during periods of mid-level air intake requirements, only the center air intake valve is shut down, so that inflows come from the first and second side air intake valves to generate a tumble; during periods of high air intake requirements, the maximum air intake volume is effectively increased.

Further, by supplying fuel to only the first side air intake valve and the center air intake valve, and not supplying any to the second side air intake valve, then, during periods of mid- and high level air intake, there is a stratification between the flow containing a fuel mixture and that which does not, thereby generating stratified combustion.

On the other hand, when during periods of low air intake requirements, the foregoing center air intake valve and second side air intake valve are shut down, the inflow into the cylinder is confined to the air intake from the first side air intake valve, thereby effectively generating a swirl; during periods of mid-level air intake requirements, only the foregoing second side air intake valve is shut down, so that the inflows are from both the first side air intake valve and from the center air intake valve, the two flows effectively generating a diagonal swirl. Further, during periods of high air intake, the effect is to increase the maximum air intake volume.

Also, by directing the supply of fuel primarily toward the foregoing first side air intake valve opening and the center air intake valve opening, then, during periods of low and of mid-level air intake, there is a flow generated in the cylinder that stabilizes combustion, and during periods of high air intake, the added air intake from the second side air intake valve opening which contains almost no fuel creates a stratified combustion, and this design too is effective in the stabilization of combustion of lean air/fuel mixture ratios.

According to another embodiment during periods of low air intake requirements, both side air intake valves are shut down and inflow occurs just through the center air intake valve, thereby increasing the flow speed and effectively generating a tumble. During mid-level air intake requirements, only the center air intake valve is shut down, and the inflows are confined to the first and second side air intake valves, thus generating a tumble. Also, the design is effective in increasing the maximum air intake volume during periods of high air intake operations.

Also, since the fuel is directed at the first and second side air intake valve openings and at the center air intake opening in all the situations of low, mid-level, and high air intake requirements, an appropriate air/fuel mixture is obtained, which effectively allowing stable combustion.

Furthermore, when during periods of low and mid-level air intake requirements, the center air intake valve is shut down the air flows enter from the first and second side air intake valves, thereby generating a tumble. During high air intake periods, the maximum air intake volume is effectively increased.

Also, by directing the supply of fuel toward the first and second side air intake valve openings, an appropriate mixture is obtained during periods of low and mid-level air intake, but during high air intake periods, the inflow from the center air intake valve opening that contains almost no fuel effectively generates stratified combustion, effectively stabilizing the combustion of lean air/fuel mixture ratios.

## Claims

1. Internal combustion engine comprising:
an intake passage arrangement (48,48a,48b,48c 48d) with a plurality of air intake valves (11a,11b,11c) defining an air intake side,
an exhaust passage arrangement (47,47a,47b,47c) having at least one exhaust valve (13a,13b), and
a valve operating mechanism including at least one camshaft (16,17) for operating said air intake and exhaust valves, and
at least two valve shutdown means (18a,18b), being operated hydraulically via oil passages (33d,33e), each for temporarily uncoupling one of said intake valves (11a,11b,11c) from said valve operating mechanism,
**characterized by**
two oil passages (33d,33e) located on the air intake side and running in parallel to each other and to said camshaft (16), each individually communicating oil to one of said valve shutdown means (18a,18b) of said intake valves (11a,11c).

2. Internal combustion engine according to claim 1,
**characterized in that**
said oil passages comprise
a first oil passage (33d) communicating oil to said valve shutdown means (18a) of a center air intake valve (11a), and
a second oil passage (33e) communicating oil to said valve shutdown means (18b) of one side air intake valve (11c), wherein the axis (B1) of said center air intake valve (11a), and the axis (B2) of said side air intake valve (11c) include an angle.

3. Internal combustion engine according to claim 1 or 2,
**characterized *by***
a third oil passage (33g) communicating oil to said valve shutdown means (19) of one exhaust valve (13a), and running parallel to said first two oil passages (33d,33e) and to said camshaft (16,17).

4. Internal combustion engine according to claim 2 or 3,
**characterized in that**
said first oil passage (33d) and said second oil passage (33e) are situated on both sides of the lifter guide holes (20a,20b,20c) of said intake valves (11a,11b,11c).

5. Internal combustion engine according to at least one of the claims 1 to 4,
**characterized in that**
said at least one camshaft (16,17) for operating said air intake valves (11a,11b,11c) and exhaust valves (13a,13b) is supported by air intake and exhaust carriers (20,30), which are separable from the cylinder head (4).

6. Internal combustion engine according to claim 5,
**characterized in that**f
said oil passages (33d,33e,33g) are formed within said air intake and exhaust carriers (20,30).

## Patentansprüche

1. Brennkraftmaschine mit:
einer Einlaßkanalanordnung (48,48a,48b,48c,48d) mit einer Mehrzahl von Lufteinlaßventilen (11a,11b,11c), die eine Lufteinlaßseite begrenzen,
eine Auslaßkanalanordnung (47,47a,47b,47c), die zumindest ein Auslaßventil (13a,13b) aufweist, und
eine Ventilbetätigungsvorrichtung, die zumindest eine Nockenwelle (16,17) zur Betätigung der Lufteinlaß- und Auslaßventile enthält und
zumindest zwei Ventil-Abschalteinrichtungen (18a,18b), die hydraulisch über Ölkanäle (33d,33e) betätigt werden, wobei jeder zum zeitweiligen Entkuppeln eines der Einlaßventile (11a,11b,11c) von der Ventilbetätigungsvorrichtung, vorgesehen ist,
**gekennzeichnet durch**
zwei Ölkanäle (33d,33e), die auf der Lufteinlaßseite angeordnet sind und parallel zueinander und zu der Nockenwelle (16) verlaufen, wobei jeder einzeln Öl zu einer der Ventil-Abschalteinrichtüngen (18a,18b) der Einlaßventile (11a,11c) führt.

2. Brennkraftmaschine nach Anspruch 1,
**dadurch gekennzeichnet, daß**
die Ölkanäle aufweisen:
einen ersten Ölkanal (33d), der Öl zu der Ventil-Abschalteinrichtung (18a) des mittleren Lufteinlaßventiles (11a) führt, und
einen zweiten Ölkanal (33e), der Öl zu der Ventil-Abschalteinrichtung (18b) eines seitlichen Lufteinlaßventiles (11c) führt, wobei die Achse (B1) des mittleren Lufteinlaßventiles (11a) und die Achse (B2) des seitlichen Lufteinlaßventiles (11c) unter einem Winkel zueinander verlaufen.

3. Brennkraftmaschine nach Anspruch 1 oder 2,
**gekennzeichnet durch**
einen dritten Ölkanal (33g), der Öl zu der Ventil-Abschalteinrichtung (19) für ein Auslaßventil (13a) führt, und parallel zu den ersten zwei Ölkanälen (33d,33e) und zu der Nockenwelle (16,17) verläuft.

4. Brennkraftmaschine nach Anspruch 2 oder 3,
**dadurch gekennzeichnet, daß**
der erste Ölkanal (33d) und der zweite Ölkanal (33e) zu beiden Seiten der Ventilstößelbohrungen (20a,20b,20c) der Einlaßventile (11a,11b,11c) angeordnet sind.

5. Brennkraftmaschine nach zumindest einem der Ansprüche 1 bis 4,
**dadurch gekennzeichnet, daß**
zumindest eine Nockenwelle (16,17) zur Betätigung der Luft-einlaßventile (11a,11b,11c) oder der Auslaßventile (13a,13b) durch Lufteinlaß- oder Auslaßträger (20,30) gelagert sind, die von dem Zylinderkopf (4) trennbar sind.

6. Brennkraftmaschine nach Änspruch 5,
**dadurch gekennzeichnet, daß**
die Ölkanäle (33d,33e,33g) innerhalb der Lufteinlaß- oder Auslaßträger (20,30) angeordnet sind.

## Revendications

1. Moteur à combustion interne comprenant :
un aménagement de passage d'admission (48, 48a, 48b, 48c, 48d) comportant une pluralité de soupapes d'admission d'air (11a, 11b, 11c) définissant un côté d'admission d'air ;
un aménagement de passage d'échappement (47, 47a, 47b, 47c) comportant au moins une soupape d'échappement (13a, 13b), et
un mécanisme de commande de soupape comprenant au moins un arbre à cames (16, 17) destiné à actionner lesdites soupapes d'admission et d'échappement, et
au moins deux moyens de fermeture de soupape (18a, 18b) actionnés de manière hydraulique par l'intermédiaire de passages d'huile (33d, 33e), chacun étant destiné à désaccoupler de manière temporaire l'une desdites soupapes d'admission (11a, 11b, 11c) dudit mécanisme de commande de soupape,
caractérisé par
deux passages d'huile (33d, 33e) situés du côté de l'admission d'air et courant en parallèle l'un par rapport à l'autre et par rapport au dit arbre à cames (16), chacun fournissant de manière individuelle de l'huile à l'un desdits moyens de fermeture de soupape (18a, 18b) desdites soupapes d'admission (lia, llc).

2. Moteur à combustion interne selon la revendication 1, caractérisé en ce que lesdits passages d'huile comprennent :
un premier passage d'huile (33d) fournissant de l'huile aux dits moyens de fermeture de soupape (18a) d'une soupape centrale d'admission d'air (11a), et
un second passage d'huile (33e) fournissant de l'huile aux dits moyens de fermeture de soupape (18b) d'une soupape latérale d'admission d'air (11c), dans lequel l'axe (B1) de ladite soupape centrale d'admission d'air (11a) et l'axe (B2) de ladite soupape latérale d'admission d'air (11c) font un angle.

3. Moteur à combustion interne selon les revendications 1 ou 2, caractérisé par un troisième passage d'huile (33g) fournissant de l'huile aux dits moyens de fermeture de soupape (19) d'une soupape d'échappement (13a), et courant de manière parallèle aux dits deux premiers passages d'huile (33d, 33e) et au dit arbre à cames (16, 17).

4. Moteur à combustion interne selon les revendications 2 ou 3, caractérisé en ce que ledit premier passage d'huile (33d) et ledit second passage d'huile (33e) sont situés sur les deux côtés des orifices de guidage de came (20a, 20b, 20c) desdites soupapes d'admission (11a, 11b, 11c).

5. Moteur à combustion interne selon au moins l'une des revendications 1 à 4, caractérisé en ce que ledit au moins un arbre à cames (16, 17) destiné à actionner lesdites soupapes d'admission d'air (11a, 11b, 11c) et lesdites soupapes d'échappement (13a, 13b) est supporté par des porteurs d'admission et d'échappement d'air (20, 30), qui peuvent être déposés de la culasse (4).

6. Moteur à combustion interne selon la revendication 5, caractérisé en ce que lesdits passages d'huile (33d, 33e, 33g) sont formés à l'intérieur desdits porteurs d'admission et d'échappement d'air (20, 30).
